# EUROPEAN PATENT APPLICATION

(11) **EP 1 134 656 A1**
(43) Date of publication of application: **19.09.2001**
(21) Application number: 00946487.6
(22) Date of filing: 25.07.2000
(51) Int. Cl.: G06F 9/46, G06F 1/04, G06F 1/32

(54) **OPERATING SYSTEM AND VIRTUAL COMPUTER SYSTEM**

(30) Priority: 29.07.1999 JP 21557799
(71) Applicant: MATSUSHITA ELECTRIC INDUSTRIAL CO., LTD., Kadoma-shi, Osaka 571-0050 (JP)
(72) Inventor: RYUKAWA, Mika, Kawasaki-shi, Kanagawa 211-0025 (JP); SASAKI, Hiroyuki, Yokohama-shi, Kanagawa 224-0041 (JP)
(74) Representative: Grünecker, Kinkeldey, Stockmair & Schwanhäusser Anwaltssozietät
(86) International application number: JP0004948
(87) International publication number: WO0109720

(57) **Abstract**

A virtual computer system, wherein request details from a plurality of tasks or an operating system are manage-controlled to thereby reduce power consumption. An operating system for managing a plurality of tasks in a virtual computer system, wherein, when a power on/off switching request is issued from a task other than a task currently being executed, the execution status of the task being executed and each task associated with a hardware device (4) used by the task are stored and managed by a storage unit (1). A receiving unit (2) receives a power on/off switching request from a task other than the task being executed and stores it. A control unit (3) compares what are stored in the receiving unit (2) with what are stored in the storage unit (1) and, when the current power on/off switching request is made from a task other than the task currently being executed, processes the power on/off switching request so as to prevent it from being executed on the hardware device (4).

## Description

### <Technical Field>

The present invention relates to an operating system capable of executing a plurality of tasks in a computer system and a virtual computer system capable of executing a single operating system or a plurality of operating systems including the operating system.

### <Background Art>

In recent years, in the computer system, chances to select/execute a plurality of tasks by the operating system (also abbreviated as OS hereinafter) are increased, and different tasks are executed and managed under the operation system (s) in one CPU or a plurality of CPUs. In such operating system, a plurality of tasks are executed on a time-division basis while switching sequentially them, and thus the power-saving in the operating system is an important subject.

Also, there are many chances to select/execute a plurality of operating systems, and various virtual machines (VMs) having a function for controlling the execution of the operating systems have been proposed. In such virtual storage computer systems, a plurality of operating systems are executed on a time-division basis while switching sequentially them, and thus the power-saving in each operating system is an important subject.

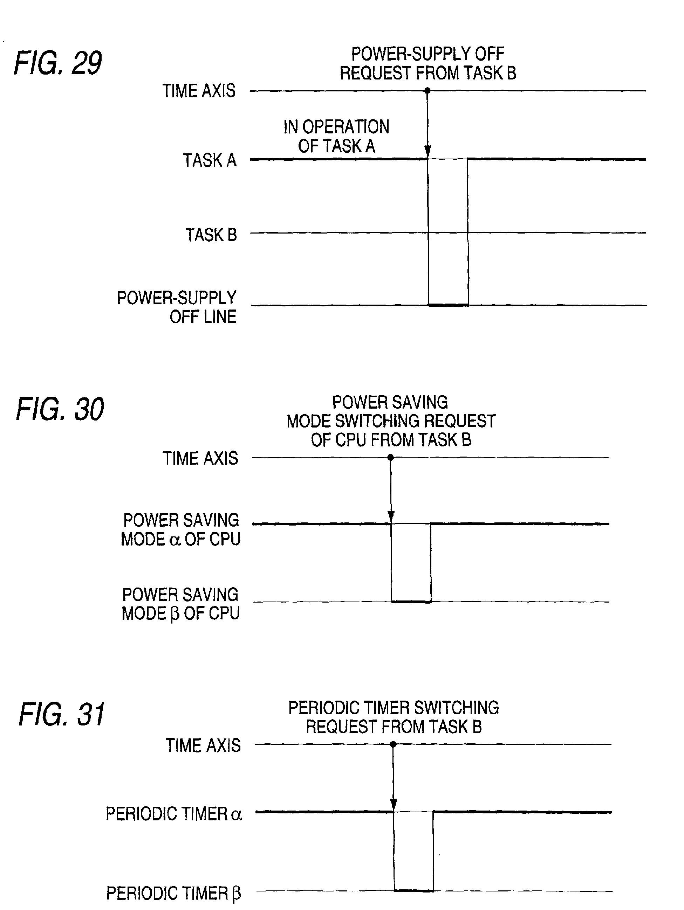

Operations of the operating system which manages a plurality of tasks in the prior art will be explained with reference to FIG.29 to FIG.31 hereunder.

FIG.29 is a transition diagram of an operating system in the prior art at the time of power-supply OFF request. According to the method of switching ON/OFF of the power supply in the prior art, in the operating system having a task A and a task B, if the task B issues a power-supply OFF request in operation of the task A, the operating system once receives the power-supply OFF request from the task B to turn off the power-supply in spite of the operation of the task A, and then turns ON the power supply again. Also, the similar process is applied to the power-supply ON request. Accordingly, since such a process is carried out that the power supply is brought into the OFF state once and then the power supply is restored into the ON state again to continue the process of the task A, the useless process is generated such that the power supply is returned to the ON state again after the power supply is brought into the OFF state once.

FIG. 30 is a transition diagram of the operating system in the prior art at the time of power-saving mode switching request. According to the method of switching the power-saving mode of the CPU in the prior art, in the operating system having two tasks of the task A and the task B, if the task B issues the power-saving mode switching request to switch into the power-saving mode β during when the task A is in operation in the power-saving mode α, such a process is carried out that the mode is switched into the power-saving mode β once although the task A is in operation in the power-saving mode α and then is restored to the power-saving mode α. Accordingly, the useless process is generated such that the mode is returned to the power-saving mode α again after the mode is switched into the power-saving mode β once.

FIG.31 is a transition diagram of the operating system in the prior art at the time of periodic-timer switching request. According to the periodic-timer switching method in the prior art, in the operating system having two tasks of the task A and the task B, if the task B issues the periodic-timer switching request to switch into the periodic-timer β during when the task A is in operation at the periodic-timer α, such a process is carried out that the periodic-timer is switched into the periodic-timer β once although the task A is in operation at the periodic-timer α and then is restored into the periodic-timer α. Accordingly, the useless process is generated such that the period is returned to the periodic-timer α again after the period is switched into the periodic-timer β once.

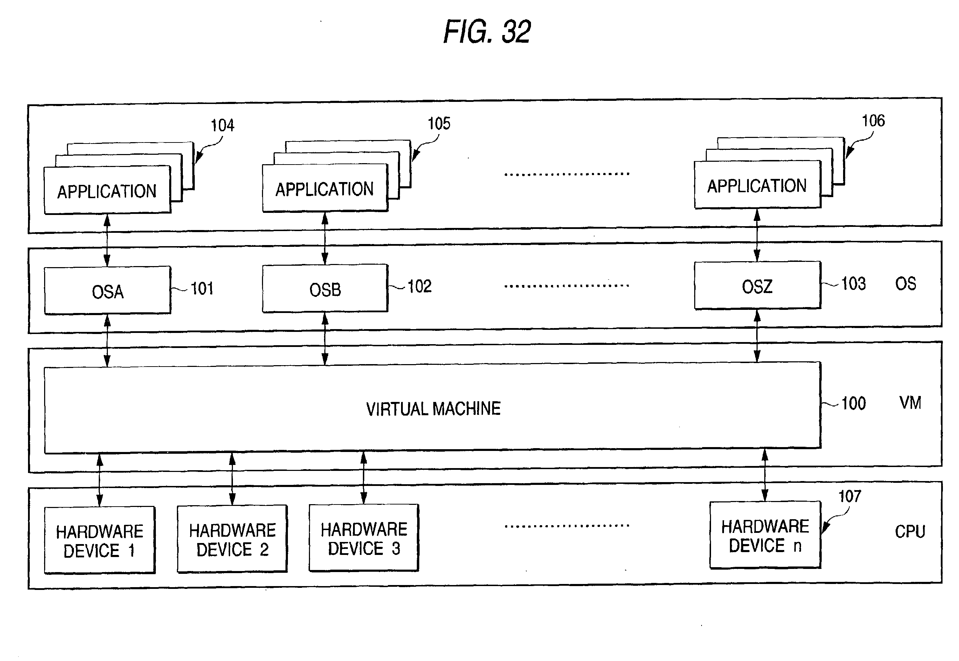

Next, operations of virtual computer systems having a plurality of operating systems will be explained with reference to FIG.32 to FIG.35 hereunder.

FIG.32 shows a configuration of a virtual computer system. In the virtual computer system, under the virtual machine 100 having one CPU or a plurality of CPUs, operating systems A101, B102,..., Z103 that have different characteristics such as the real time property, the weight of load, etc. are executed, and also various applications 104, 105, 106 are executed while controlling a plurality of hardware devices 107 on respective operating systems.

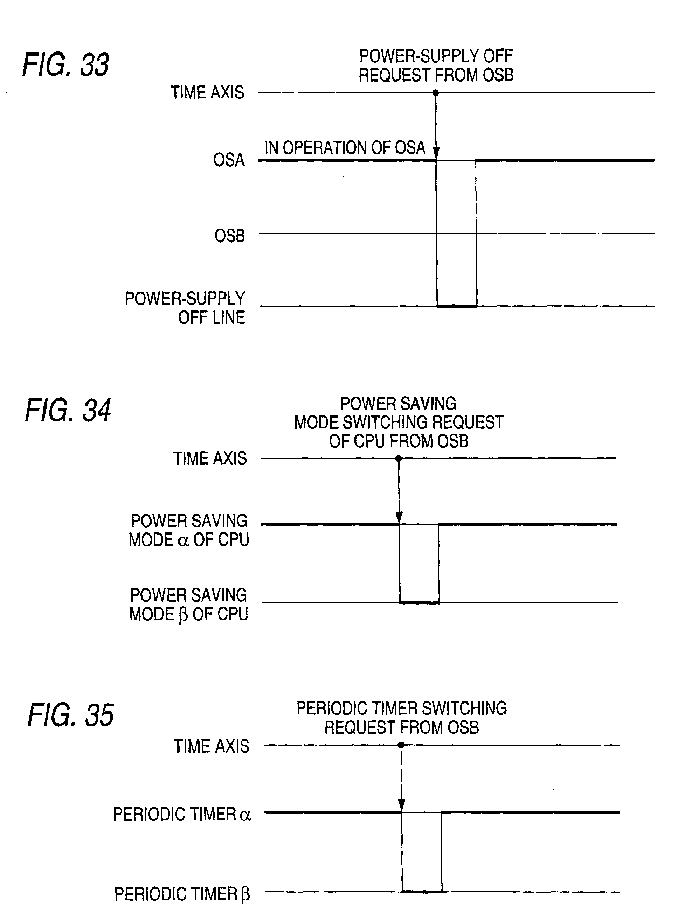

FIG.33 is a transition diagram of a virtual computer system in the prior art at the time of power-supply OFF request. According to the power-supply OFF switching method in the prior art, in a system having two operating systems of an operating system A (referred to as OSA hereinafter) and an operating system B (referred to as OSB hereinafter), if the power-supply OFF is requested from the OSB in operation of the OSA, such a process is carried out that the power supply is turned OFF once and then the power supply is turned ON again to continue the process of the OSA. Accordingly, since the process of OSA is continued by returning the power supply to the ON state again after the power supply is brought into the OFF state once, the useless process is generated such that the power supply is returned to the ON state again after the power supply is brought into the OFF state once.

FIG.34 is a transition diagram of the virtual computer system in the prior art at the time of power-saving mode switching request. According to the power-saving mode switching method in the prior art, in the system having two operating systems of the operating system A and the operating system B, if the switching to the power-saving mode β is requested by the OSB during when the OSA is in operation in the power-saving mode α, the mode is switched into the power-saving mode β once although the OSA is in operation in the power-saving mode α, and then is restored into the power-saving mode α again. Accordingly, the useless process is generated such that themode is returned to the power-saving mode α again after the mode is switched into the power-saving mode β once.

FIG.35 is a transition diagram of the virtual computer system in the prior art at the time of periodic-timer switching request. According to the periodic-timer switching method. in the prior art, in the system having two operating systems of the operating system A and the operating system B, if the switching to the periodic-timer d is requested by the OSB during when the OSA is in operation at the periodic-timer α, the period is switched into the periodic-timer β once although the OSA is in operation at the periodic-timer α, and then is restored into the periodic-timer α again. Therefore, the useless process is generated such that the period is returned to the periodic-timer α again after the period is switched into the periodic-timer β once.

As described above, in the operating system for managing a plurality of tasks in the prior art, if the switching is requested to the hardware device by the task other than the task A during when the task A is in operation, such a process is generated that the request is executed once and then the state is returned to the preceding state of the switching. Therefore, the useless operation is generated such that the request content in which there is no necessity to process the switching request is also processed, the operating system must access to the hardware device every time of such operation. Thus, there is the problem that the power is consumed.

Also, in the virtual computer system for controlling a plurality of operating systems having different characteristics in the prior art, if the switching is requested to the hardware device by the operating system other than the operating system A during when the operating system A is in operation, such a process is generated that the request is executed once and then the state is returned to the preceding state of the switching. Therefore, the useless operation is generated such that the request matter in which there is no necessity to process the switching request is also processed, the operating system must access to the hardware device every time of such operation. Thus, there is the problem that the power is consumed.

The present invention has been made in view of above problems, and it is an object of the present invention to provide an operating system and a virtual computer system capable of managing requests for hardware devices such as power-supply ON/OFF, etc. and reducing a power consumption, upon controlling a plurality of tasks or a plurality of operating systems.

### <Disclosure of the Invention>

(1) In an operating system for managing a plurality of tasks, an operating system of the present invention comprises a storing means for storing execution information containing execution states of hardware devices in respective tasks; a request receiving means for receiving at least one request of a power-supply ON request and a power-supply OFF request to the hardware devices; and a power-supply switching/controlling means for controlling process execution of the request based on the execution information, and not-performing the process execution of the power-supply ON request or the power-supply OFF request when other task is using the hardware devices if at least one task issues at least one of the power-supply ON request and the power-supply OFF request to at least one hardware device.
(2) In an operating system for managing a plurality of tasks, an operating system of the present invention comprises a storing means for storing power-saving mode information of hardware devices in respective tasks; a request receiving means for receiving a power-saving mode switching request; and a power-saving mode switching/controlling means for controlling process execution of the request based on the power-saving mode information, and setting a power-saving mode based on the power-saving mode information of a switched task when the task is switched.
(3) In an operating system of the present invention, in the (2), the power-saving mode switching/ controlling means can set/change the power-saving mode based on the power-saving mode information during the execution of the task.
(4) An operating system of the present invention, in the (2) or (3), further comprises a priority comparing means for comparing execution priorities of the tasks or priorities of the power-saving mode information, and wherein the power-saving mode switching/controlling means sets/changes the power-saving mode based on a compared result of the priorities during the execution of the task.
(5) In an operating system for managing a plurality of tasks, an operating system of the present invention comprises a storing means for storing power-saving mode information of hardware devices in respective tasks and power-saving mode information of a concerned operating system itself; a request receiving means for receiving a power-saving mode switching request; and a power-saving mode switching/controlling means for controlling process execution of the request based on the power-saving mode information, and setting/changing a power-saving mode by comparing the power-saving mode information of the task with the power-saving mode information of the operating system itself.
(6) In an operating system for managing a plurality of tasks, an operating system of the present invention comprises a storing means for storing power-saving mode information of hardware devices in respective tasks and power-saving mode information of a concerned operating system itself; a request receiving means for receiving a power-saving mode switching request; and a power-saving mode switching/controlling means for controlling process execution of the request based on the power-saving mode information, and setting/ changing a power-saving mode by comparing the power-saving mode information of a switched task with the power-saving mode information of the operating system itself when the task is switched.
(7) In an operating system for managing a plurality of tasks, an operating system of the present invention comprises a storing means for storing periodic-timer information of hardware devices in respective tasks; a request receiving means for receiving a periodic-timer switching request; and aperiodic-timer switching/controlling means for controlling process execution of the request based on the periodic-timer information, and setting a periodic-timer based on the periodic-timer information of a switched when the task is switched.
(8) In an operating system of the present invention, in the (7), the periodic-timer switching/controlling means can set/change the periodic-timer based on the periodic-timer information during the execution of the task.
(9) An operating system of the present invention, in the (7) or (8), further comprises a priority comparing means for comparing execution priorities of the tasks or priorities of the periodic-timer information, and wherein the periodic-timer switching/controlling means sets/changes the periodic-timer based on a compared result of the priorities during the execution of the task.
(10) In an operating system for managing a plurality of tasks, an operating system of the present invention comprises a storing means for storing periodic-timer information of hardware devices in respective tasks and periodic-timer information of a concerned operating system itself; a request receiving means for receiving a periodic-timer switching request; and a power-saving mode switching/controlling means for controlling process execution of the request based on the periodic-timer information, and setting/changing a periodic-timer by comparing the periodic-timer information of the task with the periedic-timer information of the operating systemitseif.
(11) In an operating system for managing a plurality of tasks, an operating system of the present invention comprises a storing means for storing periodic-timer information of hardware devices in respective tasks and periodic-timer information of a concerned operating system itself; a request receiving means for receiving a periodic-timer switching request; and a periodic-timer switching/ controlling means for controlling process execution of the request based on the periodic-timer information, and setting/changing a periodic-timer by comparing the periodic-timer information of a switched task with the periodic-timer information of the operating system itself when the task is switched.
(12) A virtual computer system of the present invention comprises an executing/controlling means for executing/ controlling at least one of operating systems set forth in the (1) to (11).
   In the above operating system, if at least one task issues the power-supply ON request or the power-supply OFF request to at least one hardware device, the power-supply ON request or the power-supply OFF request is not carried out to immediately respond to the issued request when other task is using the hardware device, and the power-supply ON request or the power-supply OFF request of the concerned hardware device is carried out when the task is switched, for example, after the task that is in operation is ended. Accordingly, the consumption of the useless power can be reduced and also the current consumption can be the suppressed.
   Also, if one task issues the power-saving mode switching request, the power-saving mode switching process is not carried out to immediately respond to the issued request when other task is being executed. The power-saving mode of the hardware device of CPU, etc. is set based on the power-saving mode information of the task when the task is switched after task that is in operation is ended or during when the switched task is in operation, for example, or the power-saving mode is set/changed by comparing the execution priority of the task with the priority of the power-saving mode information, or the power-saving mode is set/changed by comparing the power-saving mode information of the task with the power-saving mode in formation of the operating system itself. Accordingly, the consumption of the useless power can be reduced and also the current consumption can be the suppressed.
   In addition, if one task issues the periodic-timer switching request, the periodic-timer switching process is not carried out to immediately respond to the issued request when other task is being executed. The periodic-timer of the hardware device of CPU, etc. is set based on the periodic-timer information of the task when the task is switched after the task that is in operation is ended or during when the switched task is in operation, for example, or the periodic-timer is set/changed by comparing the execution priority of the task with the priority of the periodic-timer information, or the periodic-timer is set/changed by comparing the periodic-timer information of the task with the periodic-timer information of the operating system itself. Accordingly, the consumption of the useless power can be reduced and also the current consumption can be the suppressed.
(13) In a virtual computer system for executing/ controlling a plurality of operating systems, a virtual computer system of the present invention comprises a storing means for storing execution information containing execution states of hardware devices in respective operating systems; a request receiving means for receiving at least one request of a power-supply ON request and a power-supply OFF request to the hardware devices; and a power-supply switching/controlling means for controlling process execution of the request based on the execution information, and not-performing the process execution of the power-supply ON request or the power-supply OFF request when other operating system is using the hardware devices if at least one operating system issues at least one of the power-supply ON request and the power-supply OFF request to at least one hardware device.
(14) In a virtual computer system for executing/ controlling a plurality of operating systems, a virtual computer system of the present invention comprises a storing means for storing power-saving mode information of hardware devices in respective operating systems; a request receiving means for receiving a power-saving mode switching request; and a power-saving mode switching/ controlling means for controlling process execution of the request based on the power-saving mode information, and setting a power-saving mode based on the power-saving mode information of a switched operating system when the operating system is switched.
(15) In a virtual computer system of the present invention, in the (14), the power-saving mode switching/controlling means can set/change the power-saving mode based on the power-saving mode information during the execution of the operating system.
(16) A virtual computer system of the present invention, in the (14) or (15), further comprises a priority comparing means for comparing execution priorities of the operating systems or priorities of the power-saving mode information, and where in the power-saving mode switching/controllingmeans sets/changes the power-saving mode based on a compared result of the priorities during the execution of the operating system.
(17) In a virtual computer system for executing/ controlling a plurality of operating systems, a virtual computer system of the present invention comprises a storing means for storing power-saving mode information of hardware devices in respective operating systems and power-saving mode information of a concerned virtual computer itself; a request receiving means for receiving a power-saving mode switching request; and a power-saving mode switching/controlling means for controlling process execution of the request based on the power-saving mode information, and setting/ changing a power-saving mode by comparing the power-saving mode information of the operating system with the power-saving mode information of the virtual computer system itself.
(18) In a virtual computer system for executing/ controlling a plurality of operating systems, a virtual computer system of the present invention comprises a storing means for storing power-saving mode information of hardware devices in respective operating systems and power-saving mode information of a concerned virtual computer system itself; a request receiving means for receiving a power-saving mode switching request; and a power-saving mode switching/controlling means for controlling process execution of the request based on the power-saving mode information, and setting/changing a power-saving mode by comparing the power-saving mode information of a switched operating system with the power-saving mode information of the virtual computer system itself when the operating system is switched.
(19) In a virtual computer system for executing/ controlling a plurality of operating systems, a virtual computer system of the present invention comprises a storing means for storing periodic-timer information of hardware devices in respective operating systems; a request receiving means for receiving a periodic-timer switching request; and aperiodic-timer switching/controlling means for controlling process execution of the request based on the periodic-timer information, and setting a periodic-timer based on the periodic-timer information of a switched when the operating system is switched.
(20) In a virtual computer system of the present invention, in the (19), the periodic-timer switching/ controlling means can set/change the periodic-timer based on the periodic-timer information during the execution of the operating system.
(21) A virtual computer systemof the present invention, in the (19) or (20), further comprises a priority comparing means for comparing execution priorities of the operating systems or priorities of the periodic-timer information, and wherein the periodic-timer switching/controlling means sets/ changes the periodic-timer based on a compared result of the priorities during the execution of the operating system.
(22) In a virtual computer system for executing/ controlling a plurality of operating systems, a virtual computer system of the present invention comprises a storing means for storing periodic-timer information of hardware devices in respective operating systems and periodic-timer information of a concerned virtual computer system itself; a request receiving means for receiving a periodic-timer switching request; and a power-saving mode switching/controlling means for controlling process execution of the request based on the periodic-timer information, and setting/changing a periodic-timer by comparing the periodic-timer information of the operating system with the periodic-timer information of the virtual computer system itself.
(23) In a virtual computer system for executing/ controlling a plurality of operating systems, a virtual computer system of the present invention comprises a storing means for storing periodic-timer information of hardware devices in respective operating systems and periodic-timer information of a concerned virtual computer system itself; a request receiving means for receiving a periodic-timer switching request; and a periodic-timer switching/controlling means for controlling process execution of the request based on the periodic-timer information, and setting/changing a periodic-timer by comparing the periodic-timer information of a switched operating system with the periodic-timer information of the virtual computer system itself when the operating system is switched.

In the above virtual computer system, if at least one operating system issues the power-supply ON request or the power-supply OFF request to at least one hardware device, the power-supply ON request or the power-supply OFF request is not carried out to immediately respond to the issued request when other operating system is using the hardware device, and the power-supply ON request or the power-supply OFF request of the concerned hardware device is carried out when the operating system is switched, for example, after the operating system that is in operation is ended. Accordingly, the consumption of the useless power can be reduced and also the current consumption can be the suppressed,

Also, if one operating system issues the power-saving mode switching request, the power-saving mode switching process is not carried out to immediately respond to the issued request when other operating system is being executed. The power-saving mode of the hardware device of CPU, etc. is set based on the power-saving mode information of the operating system when the operating system is switched after operating system that is in operation is ended or during when the switched operating system is in operation, for example, or the power-saving mode is set/changed by comparing the execution priority of the operating system with the priority of the power-saving mode information, or the power-saving mode is set/changed by comparing the power-saving mode information of the operating system with the power-saving mode information of the virtual computer system itself. Accordingly, the consumption of the useless power can be reduced and also the current consumption can be the suppressed.

In addition, if one operating system issues the periodic-timer switching request, the periodic-timer switching process is not carried out to immediately respond to the issued request when other operating system is being executed. The periodic-timer of the hardware device of CPU, etc. is set based on the periodic-timer information of the operating system when the operating system is switched after the operating system that is in operation is ended or during when the switched operating system is in operation, for example, or the periodic-timer is set/changed by comparing the execution priority of the operating system with the priority of the periodic-timer information, or the periodic-timer is set/changed by comparing the periodic-timer information of the operating system with the periodic-timer information of the virtual computer system itself. Accordingly, the consumption of the useless power can be reduced and also the current consumption can be the suppressed.

### <Brief Description of the Drawings>

FIG.1 is a block diagram showing a functional configuration of a virtual computer system using an operating system according to present embodiments.

FIG.2 is a transition diagram of an operating system according to a first embodiment of the present invention.

FIG.3 is a transition diagram of another operating system according to the first embodiment of the present invention.

FIG.4 is a transition diagram of an operating system according to a second embodiment of the present invention.

FIG.5 is a transition diagram of another operating system according to the second embodiment of the present invention.

FIG.6 is a transition diagram of an operating system according to a third embodiment of the present invention.

FIG.7 is a transition diagram of another operating system according to the third embodiment of the present invention.

FIG.8 is a transition diagram of an operating system according to a fourth embodiment of the present invention.

FIG.9 is a transition diagram of another operating system according to the fourth embodiment of the present invention.

FIG.10 is a transition diagram of an operating system according to a fifth embodiment of the present invention.

FIG.11 is a transition diagram of another operating system according to the fifth embodiment of the present invention.

FIG.12 is a block diagram showing a functional configuration of a virtual computer system using an operating system having a priority comparing portion according to present embodiments.

FIG.13 is a transition diagram of an operation system according to a sixth embodiment of the present invention.

FIG.14 is a transition diagram of an operation system according to a seventh embodiment of the present invention.

FIG.15 is a block diagram showing a functional configuration of a virtual computer system according to present embodiments.

FIG.16 is a transition diagram of a virtual computer system according to an eighth embodiment of the present invention.

FIG.17 is a transition diagram of another virtual computer system according to the eighth embodiment of the present invention.

FIG.18 is a transition diagram of a virtual computer system according to a ninth embodiment of the present invention.

FIG.19 is a transition diagram of another virtual computer system according to the ninth embodiment of the present invention.

FIG.20 is a transition diagram of a virtual computer system according to a tenth embodiment of the present invention.

FIG.21 is a transition diagram of another virtual computer system according to the tenth embodiment of the present invention.

FIG.22 is a transition diagram of a virtual computer system according to an eleventh embodiment of the present invention.

FIG.23 is a transition diagram of another virtual computer system according to the eleventh embodiment of the present invention.

FIG.24 is a transition diagram of a virtual computer system according to a twelfth embodiment of the present invention.

FIG.25 is a transition diagram of another virtual computer system according to the twelfth embodiment of the present invention.

FIG.26 is a block diagram showing a functional configuration of a virtual computer system having a priority comparing portion according to present embodiments.

FIG.27 is a transition diagram of a virtual computer system according to a thirteenth embodiment of the present invention.

FIG.28 is a transition diagram of a virtual computer system according to a fourteenth embodiment of the present invention.

FIG.29 is a transition diagram of an operating system in the prior art at the time of power-supply OFF request.

FIG.30 is a transition diagram of the operating system in the prior art at the time of power-saving mode switching request.

FIG.31 is a transition diagram of the operating system in the prior art at the time of periodic-timer switching request.

FIG. 32 is a block diagram showing a configuration of a virtual computer system.

FIG.33 is a transition diagram of a virtual computer system in the prior art at the time of power-supply OFF request.

FIG.34 is a transition diagram of the virtual computer system in the prior art at the time of power-saving mode switching request.

FIG.35 is a transition diagram of the virtual computer system in the prior art at the time of periodic-timer switching request.

As symbols in Figures, 1, 11, 22, 32 are a storing portion, 2, 12, 21, 31 are a receiving portion, 3, 13, 23, 33 are a controlling portion, 4, 14, 26, 36 are a hardware device, 15, 38 are a priority comparing portion, 20, 30 are an operation system identifier, 24, 34 are a device identifier, 25, 35 are an operation system, and 27, 37 are a virtual machine.

### <Best Mode for Carrying Out the Invention>

Preferred embodiments of the present invention will be explained with reference to the accompanying drawings hereinafter.

Operating systems according to present embodiments can manage a plurality of different tasks and control the execution and switching of the tasks under the operating system(s) in one CPU or a plurality of CPUs. Also, as shown in FIG.32, virtual computer systems according to the present embodiments have a configuration that can execute operating systems A101, B102, ..., Z103 that have different characteristics such as the real time property, the weight of load, etc. are, and also execute applications 104, 105, 106 while controlling a plurality of hardware devices 107 on respective operating systems, under the virtual machine 100 having one CPU or a plurality of CPUs. As the operating systems, various operating systems such as the real time OS incorporated into the machine, the time sharing system (TSS) UNIX, etc. may be applied.

Functional configurations and operations of several embodiments of the operating system having a plurality of different tasks and the virtual computer system having a plurality of different operating systems will be explained hereinafter.

### (Operating system for managing a plurality of different tasks)

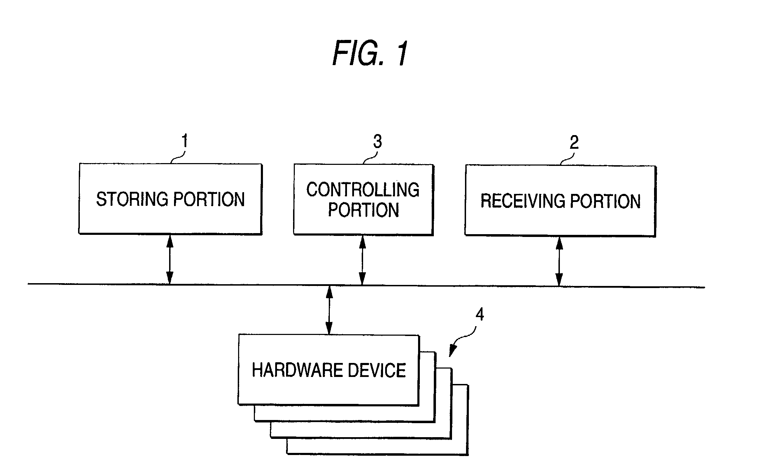

Operations for the management and the control of the switching or change request of the task in the operating systems will be explained hereunder. FIG.1 is a block diagram showing a functional configuration of a virtual computer system using the operating system according to present embodiments.

The virtual computer system comprises hardware devices 4, a storing portion 1 for storing/managing any one of a power-supply ON request and a power-supply OFF request to respective hardware devices or both of these requests every task, for example, a receivingportion 2 for receiving/storing power-supply ON/OFF switching requests to the hardware devices from the tasks, and a controlling portion 3 for comparing the contents of the power-supply ON/OFF switching requests (i.e., information of the task that has issued the power-supply ON/OFF switching request) stored in the receiving portion 2 with the contents stored in the storing portion 1 (i.e., information of the task that is in operation currently) and executing the control based on the result. The storing portion 1, the receiving portion 2, and the controlling portion 3 are constructed by software programs and data that can be executed by the CPU in semiconductor memories, etc. provided to the computer system, and more concrete configurations and operational principles of respective means can be implemented by using the well-known technology. Therefore, their explanation will be omitted herein and thus only characterizing portions of present embodiments will be explained.

As the embodiment concerning to the operation of the operating system in the virtual computer system shown in FIG.1, a first embodiment (power-supply ON/OFF switching request), second and third embodiments (power-saving mode switching request of CPU), and fourth and fifth embodiments (periodic-timer switching request) will be explained hereinafter.

### [First embodiment]

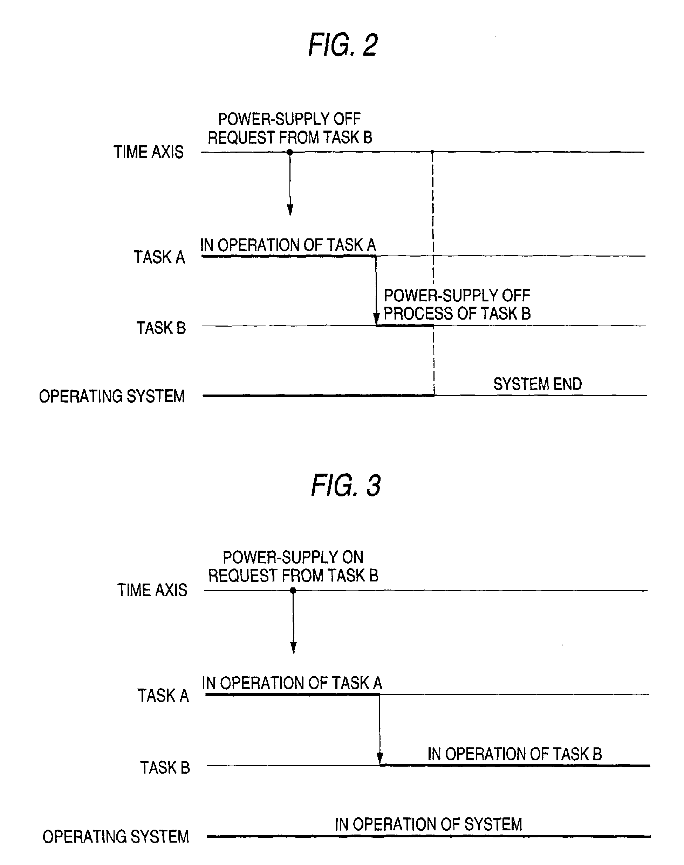

FIG.2 and FIG.3 are transition diagrams of an operating system according to a first embodiment of the present invention. In this case, the functional configuration of the virtual computer system employed in the first embodiment is shown in FIG.1.

The operating system in the first embodiment reduces the power consumption by managing/controlling the switching request of the power-supply ON request or the power-supply OFF request (referred to as a power-supply ON/OFF switching request hereinafter) to respective hardware devices in respective tasks.

The operation to issue the power-supply ON/OFF switching request in the first embodiment will be explained. In the operating system for managing a plurality of tasks, if the power-supply ON/OFF switching request is issued from the task other than the concerned task in operation of one task, the task that is in operation currently and execution states of respective tasks concerning the hardware devices, etc. used by the task are managed by the storing portion 1. The receiving portion 2 receives/stores the power- supply ON/OFF switching request from the task other than the task that is in operation. Then, the controlling portion 3 compares the content stored in the receiving portion 2 with the content stored in the storing portion 1 to examine them. As a result, if the power-supply ON/OFF switching request of this time is the request issued from other task except the task that is in operation, this power- supply ON/OFF switching request is processed not to be executed for the hardware device. In this case, the switching timing of the task, the switching approach of the task, etc. are similar to the normal operating system.

FIG.2 shows the case where the power-supply OFF request is issued from the task B during when the task A is in process. The power-supply OFF request from the task B is not executed for the hardware device when the task A is in process, and the power-supply OFF request from the task B is processed after the process of the task A is ended, and then the operation system is ended.

Also, FIG.3 shows the case where the power-supply ON request is issued from the task B during when the task A is in process. The power-supply ON request from the task B is not executed for the hardware device when the task A is in process, and the power-supply ON request from the task B is processed after the process of the task A is ended, and then the task is switched and the process of the task B is executed as it is.

Also, if both of the power-supply ON request and the power-supply OFF request are received and any one of these requests is issued, the request from the task other than the task that is in operation currently may be processed/ executed like the above after the process of the task that is in operation is ended.

As described above, in the present embodiment, if any one of the power-supply ON request and the power-supply OFF request from other task or both requests of them are issued during when one task is in operation, the task that is in operation is processed before the request is executed. Therefore, the event that the access to the hardware device is caused every time when the power-supply ON/OFF switching request is issued from other task can be prevented, and also consumption of the useless power can be prevented.

### [Second embodiment]

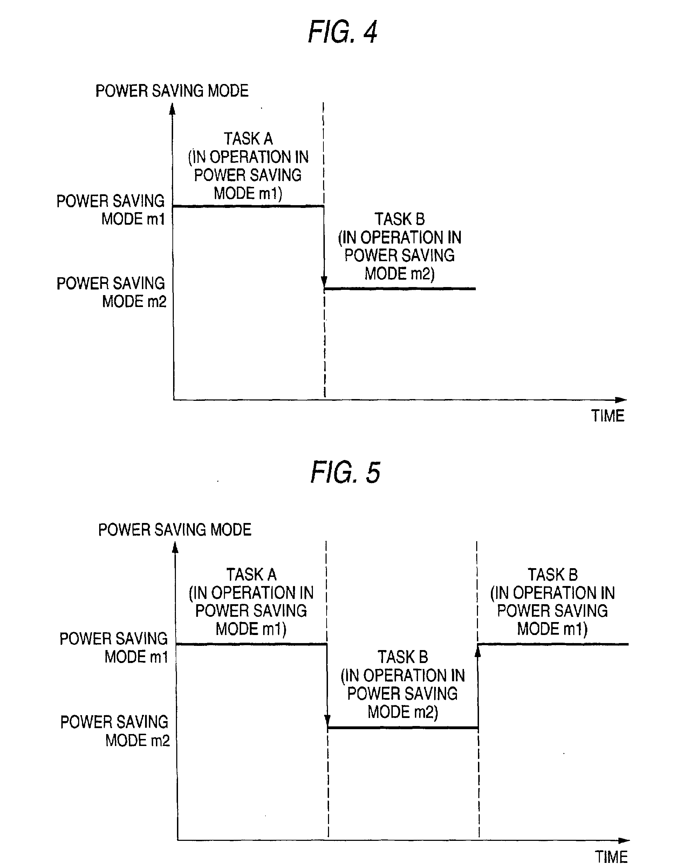

FIG.4 and FIG.5 are transition diagrams of an operation system according to a second embodiment of the present invention. The functional configuration of the virtual computer system employed in the second embodiment is shown in FIG.1.

The operating system in the second embodiment reduces the power consumption by managing/controlling the power-saving mode switching request of the CRU to respective hardware devices in respective tasks.

In this operating system, each task has power-saving mode information and also the power-saving mode switching request of the CPU for changing the power-saving mode of the CPU is received in place of the power-supply ON/OFF switching request in the configuration of the first embodiment. Since other elements are similar to the constituent elements of the first embodiment, their explanation will be omitted.

Then, an operation for issuing the power-saving mode switching request in the second embodiment will be explained with reference to FIG.1 and FIG.4. If the power-saving mode switching request is issued from the task B other than the task A during when the task A is in operation, the storing portion 1 stores/manages execution states of respective tasks and execution states of respective hardware devices and which tasks are being executed in which power-saving modes. The receiving portion 2 receives/stores the power-saving mode switching request from the task B, and the controlling portion 3 compares the content stored by the receiving portion 2 with the content stored by the storing portion 1 to examine them. As a result, if the power-saving mode switching request of this time is the request issued from the task other than task A, such power-saving mode switching request is processed not to be executed for the hard disk.

Then, the process of the task A is completed, and the power-saving mode of the CPU is set based on power-saving mode information of the switched task B at the time of task switching (in switching from the task A to the task B).

As shown in FIG.4, if the power-saving mode switching request of the task B is issued when the task A is in operation in the power-saving mode m1, such power-saving mode switching request of the task B is not executed for the hardware device, and then switching to the task B and change into the power-saving mode m2 of the task B are carried out at a point of time when the process of the task A is ended.

Also, in the operating system of the second embodiment, the task B can set/change the power-saving mode during the execution of the task B after the switching to the task B and the setting to the power-saving mode of the task B are carried out.

As shown in FIG.5, if the request for changing into the power-saving mode m2 of the task B is issued during when the task A is in operation in the power-saving mode m1, the switching to the task B and the change into the power-saving mode m2 of the task B are carried out at a point of time when the process of the task A is ended. Then, the mode is changed into the power-saving mode m1 during when the task B is in operation.

As described above, in the present embodiment, if the power-saving mode switching request is issued from other task during when one task is in operation, the event that the access to the hardware device is caused every time when the power-saving mode switching request is issued from other task can be prevented by processing the task that is in operation before such request is carried out, and also the consumption of the useless power can be prevented.

### [Third embodiment]

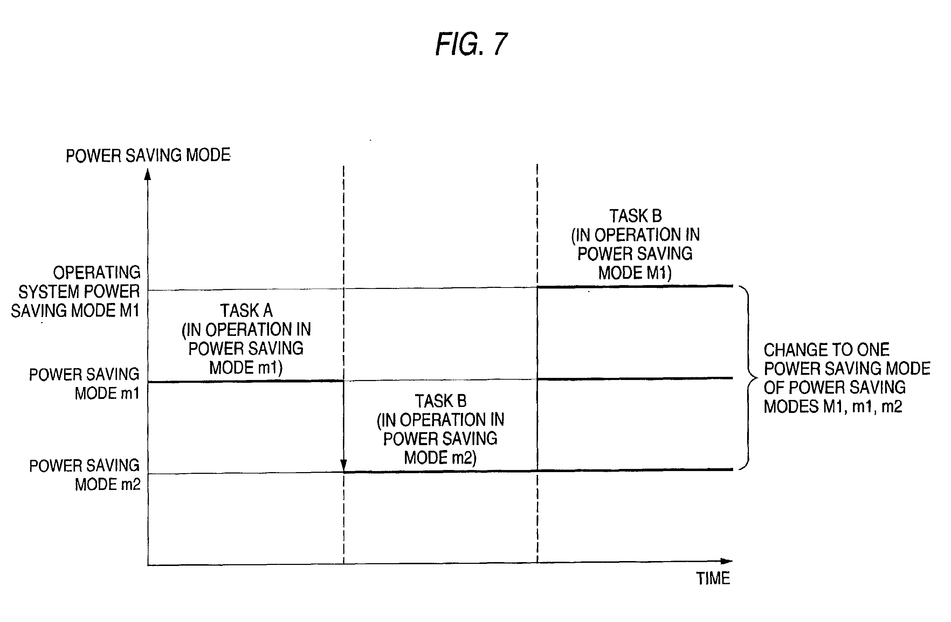

FIG . 6 and FIG.7 are transition diagrams of an operation system according to a third embodiment of the present invention. The functional configuration of the virtual computer system employed in the third embodiment is shown in FIG.1.

The operating system according to the third embodiment for managing a plurality of tasks has the power-saving mode of the operation itself. The storing portion 1 in the configuration of the second embodiment stores/manages execution states of respective hardware devices and respective tasks and which tasks are being executed in which power-saving modes, and in addition stores/manages the power-saving mode information of the operating system itself. Since other elements are similar to the constituent elements of the second embodiment, their explanation will be omitted.

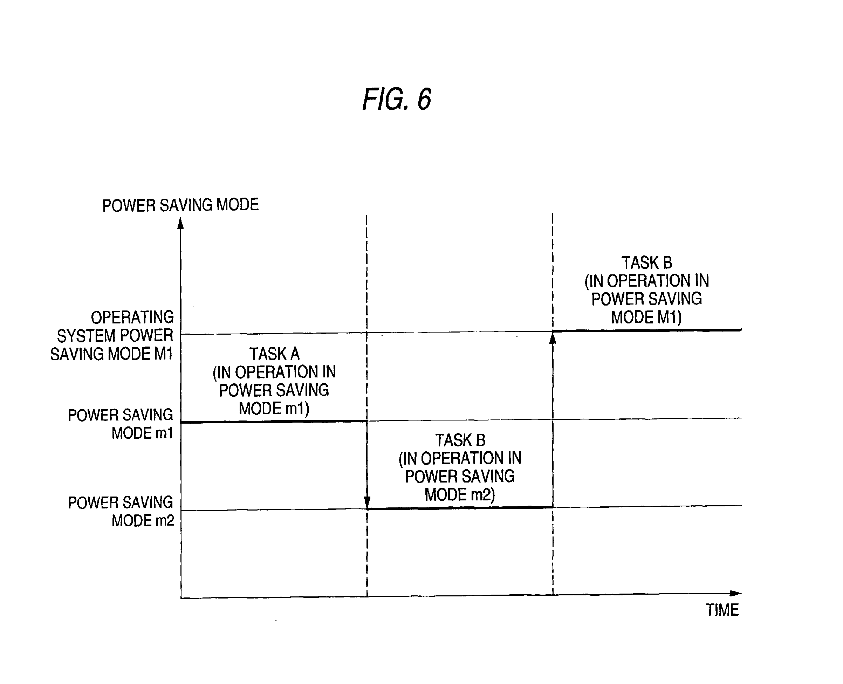

Then, an operation for issuing the power-saving mode switching request in the third embodiment will be explained with reference to FIG.1 and FIG.6. If the power-saving mode switching request is issued from the task B other than the task A during when the task A is in operation, the storing portion 1 stores/manages the power-saving mode information of the operating system itself in addition to the execution states of respective tasks and the execution states of respective hardware devices and which tasks are being executed in which power-saving modes. The controlling portion 3 compares the content of the power-saving mode switching request stored in the receiving portion 2 with the content stored in the storing portion 1 to examine them. If the power-savingmode switching request of this time is the request issued from the task other than the task A, such power-saving mode switching request is processed not to be executed for the hard disk. Then, when the process of the task A is ended, the switching to the task B and the setting of the power-saving mode of the task B are carried out. Then, the power-saving mode information of the operating system itself and the power-saving mode information of the task B are compared with each other and decided when the task B is in operation, and the power-saving mode of the CPU is set/changed according to the compared result.

As shown in FIG.6, the change request to the power-saving mode m2 of the task B is not executed for the hardware device during when the task A is in operation in the power-saving mode m1, and the task A is switched to the task B at a point of time when the process of the task A is ended and at the same time the mode is switched into the power-saving mode m2 of the task B. Then, the power-saving mode may be freely switched during the execution of the task B, based on the compared/decided result between the power-saving mode M1 of the operating system itself stored in the storing portion 1 and the power-saving mode m2 of the task B stored in the receiving portion 2.

Also, in the operating system of the third embodiment, the content of the power-saving mode information from the task B and the power-saving mode information contained in the operating system itself are compared with each other to examine them upon switching of the task B after the execution of the task A, and the power-saving mode may be freely selected based on the result.

As shown in FIG. 7, the change request to the power-saving mode m2 of the task B is not executed for the hardware device when the task A is in operation in the power-saving mode m1. Then, the power-saving mode m2 of the task B and the power-saving mode M1 of the operating system itself are compared with each other when the process to switch to the task B is executed after the process of the task A is ended. As a result, the power-saving mode to be executed later may be freely selected. If the power-savingmode is switched, for example, the priority is assigned between the power-saving mode of the operating system itself and the power-saving mode of the task, or the power-saving mode is preferentially switched into the power-saving mode in which the smaller power consumption is needed.

In this manner, in the operating system for managing/ controlling a plurality of tasks, when the power-saving mode switching request is issued from the task other than the task that is in operation, the power-saving mode of the operating system and the power-saving mode of the task that issues the power-saving mode switching request are compared with each other after the task that is in operation is processed, and the power-saving mode can be switched based on the result.

As described above, in the present embodiment, if the power-saving mode switching request is issued from other task during when one task is in operation, the event that the access to the hardware davico is cauocd every time when the power-saving mode switching request is issued from other task can be prevented by processing the task that is in operation before such request is carried out, and also the consumption of the useless power can be prevented.

### [Fourth embodiment]

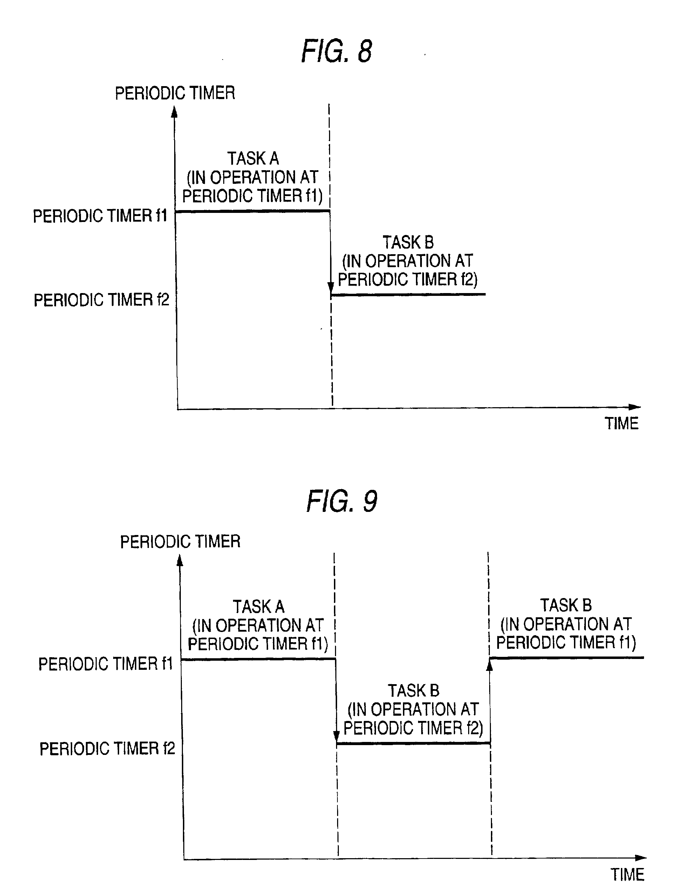

FIG.9 and FIG.9 transition diagrams of an operating system according to a fourth embodiment of the present invention. The functional configuration of the virtual computer system employed in the fourth embodiment is shown in FIG.1.

The operating system in the fourth embodiment reduces the power consumption by managing/controlling the periodic-timer switching request to respective hardware devices in respective tasks.

This operating system receives the periodic-timer switching request for changing the periodic-timer, in place of the power-supply ON/OFF switching request in the configuration of the first embodiment. Since other elements are similar to the constituent elements of the first embodiment, their explanation will be omitted.

Then, an operation for issuing the periodic-timer switching request in the fourth embodiment will be explained with reference to FIG.1 and FIG.8. In the operating system for managing/controlling a plurality of tasks, if the periodic-timer switching request is issued from the task other than the task A during when the task A is in operation, the execution states of respective tasks and the execution states of respective hardware devices are managed, and also the storing portion 1 stores/Manages which tasks are being executed at which periodic-timers. The receiving portion 2 receives/stores the periodic-timer switching request from the task B, and the controlling portion 3 compares the content stored in the receiving portion 2 with the content stored in the storing portion 1 to examine them. As the compared result, if the request content of this time is the request issued from the task B, such periodic-timer switching request is processed not to be executed. Then, when the task is switched after the process of the task A is ended, the periodic-timer of the CPU is set based on the periodic-timer information of the switched task B.

As shown in FIG.8, if the change of the task B to the periodic-timer f2 is requested during when the task A is executed at the periodic-timer f1, the periodic-timer switching request is not executed for the hardware device, and the switching to the task B and the change to the periodic-timer f2 of the task B are carried out at a point of time when the process of the task A is ended.

Also, in the operating system in the fourth embodiment, after the process of the task A is ended and then the switching to the task B and the setting to the periodic-timer f2 of the task B are carried out, the task B can set/change the periodic-timer when the task B is in operation.

As shown in FIG.9, if the change request of the task B into the periodic-timer f2 is issued during when the task Ais in operation at the periodic-timer f1, suchperiodic-timer switching request is not executed for the hardware device. Then, after the process of the task A is ended and then the switching to the task B and the change into the periodic-timer f2 of task B are carried out, the period is switched into the periodic-timer f1 when the task B is in operation.

As described above, in the present embodiment, if the periodic-timer switching request is issued from other task during when one task is in operation, the event that the access to the hardware device is caused every time when the periodic-timer switching request is issued from other task can be prevented by processing the task that is in operation before such request is carried out, and also the consumption of the useless power can be prevented.

### [Fifth embodiment]

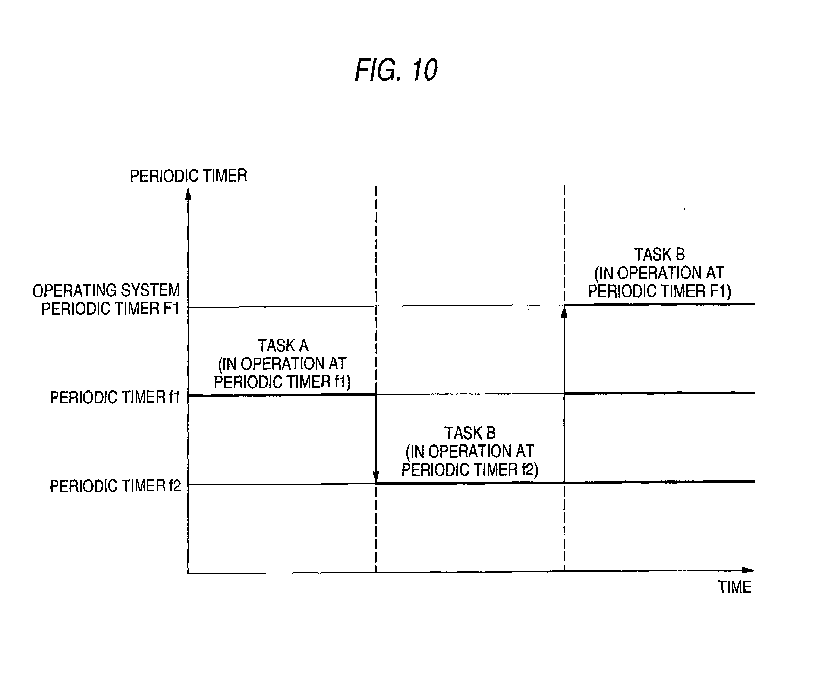

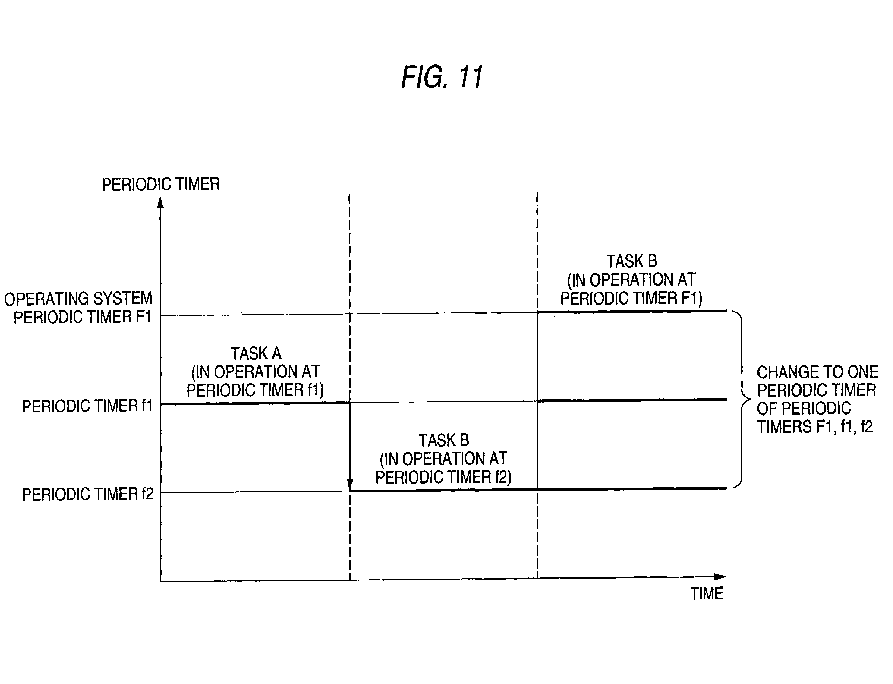

FIG.10 and FIG.11 are transition diagrams of an operating system according to a fifth embodiment of the present invention. The functional configuration of the virtual computer system employed in the fifth embodiment is shown in FIG.1.

In addition to the storing portion 1 in the configuration of the fourth embodiment stores/manages execution states of respective tasks and respective hardware devices and which tasks are being executed at which periodic-timers, the fifth embodiment stores/manages the periodic-timer information of the operating system itself. Since other elements are similar to the constituent elements of the fourth embodiment, their explanation will be omitted.

Then, an operation for issuing the periodic-timer switching request in the fifth embodiment will be explained with reference to FIG.1 and FIG.10. If the periodic-timer switching request is issued from the task other than the task A during when the task A is in operation, the storing portion 1 stores/manages the execution states of respective tasks and the execution states of respective hardware devices and which tasks are being executed at which periodic-timers and in addition the periodic-timer information of the operating system itself. The controlling portion 3 compares the content of the periodic-timer switching request from the task B stored in the receiving portion 2 with the content stored in the storing portion 1 to examine them. As a result, if the request content of this time is the request issued from the task B, such periodic-timer switching request is processed not to be executed. Then, after the process of the task A is finished and then the switching to the task B and the setting to the periodic-timer of the task B are carried out, the periodic-timer information of the operating system itself and the periodic-timer of the task B are compared with each other and decided when the task B is in operation, and then the periodic-timer is switched according to the compared result.

As shown in FIG.10, if the request for the periodic-timer f2 is issued from the task B during when the task A is in operation at the periodic-timer f1, the switching to the task B and the setting to the periodic-timer f2 of the task B are carried out at a point of time when the process of the task A is ended. Then, the periodic-timer may be freely switched during the execution of the task B, based on the compared/ decided result between the periodic-timer F1 of the operating system itself and the periodic-timer f2 of the task B.

Also, in the operating system of the fifth embodiment, when the above process of the task A is ended and the task is switched into the task B, the periodic-timer to be executed later may be freely selected based on the compared result between the periodic-timer f1 of the task B and the periodic-timer F1 of the operating system itself.

As shown in FIG.11, the change request to the periodic-timer f2 of the task B is not executed for the hardware device when the task A is in operation at the periodic-timer f1. Then, when the process of the task A is ended and the switching to the task B is executed, the periodic-timer f2 of the task B and the periodic-timer F1 of the operating system itself are compared with each other. As a result, the periodic-timer to be executed later may be freely selected.

In this manner, in the operating system for managing/ controlling a plurality of tasks, when the periodic-timer switching request is issued from the task other than the task that is being executed, the periodic-timer of the operating system and the periodic-timer of the above task are compared with each other after the task that is in operation is processed, and the periodic-timer can be switched based on the result. In case the periodic-timer is switched, for example, the priority is assigned between the periodic-timer of the operating system itself and the periodic-timer of the task, or the periodic-timer is preferentially switched into the periodic-timer which is longer and has smaller power consumption.

As described above, in the present embodiment, if the periodic-timer switching request is issued from other task during when one task is in operation, the event that the access to the hardware device is caused every time when the periodic-timer switching request is issued from other task can be prevented by processing the task that is in operation before such request is carried out, and also the consumption of the useless power can be prevented.

### [Sixth embodiment]

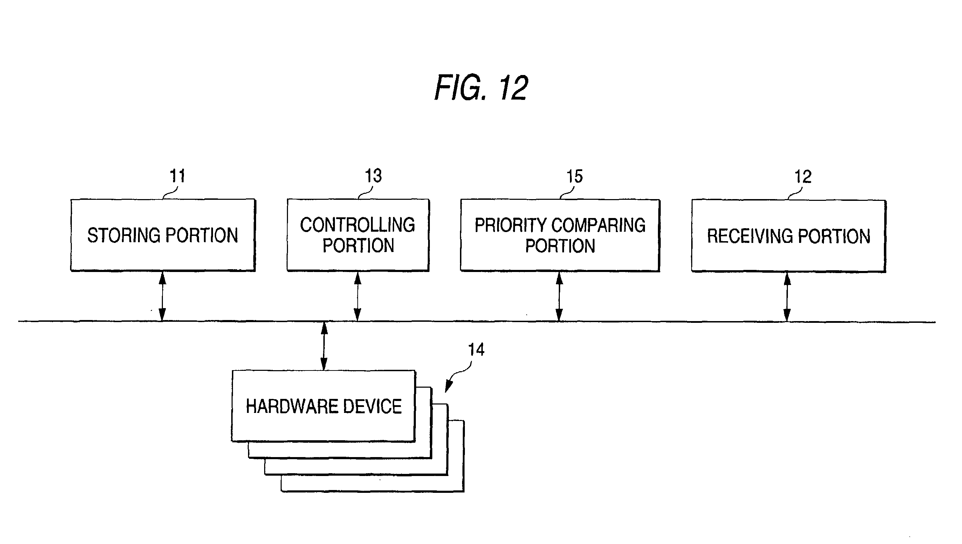

FIG.12 is a block diagram showing a functional configuration of a virtual computer system using an operating system having a priority comparing portion according to present embodiments.

This virtual computer system comprises hardware devices 14, a storing portion 11 for storing/managing the power-saving mode switching request to each hardware device 14 every task, for example, a receiving portion 12 for receiving/storing the power-savingmode switching requests from respective tasks, a controlling portion 13 for comparing the contents of the power-saving mode switching requests stored by the receiving portion 2 with the content stored in the storing portion 11 and executing the control, and a priority comparing portion 15 for comparing the priority of the power-saving mode information that is in operation currently with the priority of the power-saving mode information stored in the storing portion 11. This virtual computer system is similar to the virtual computer system shown in FIG.1 except that the priority comparing portion is provided thereto.

As the embodiment concerning to the operation of the operating system in the virtual computer system shown in FIG.12, sixth and seventh embodiments (power-saving mode switching request of CPU), and eighth and ninth embodiments (periodic-timer switching request) will be explained hereinafter.

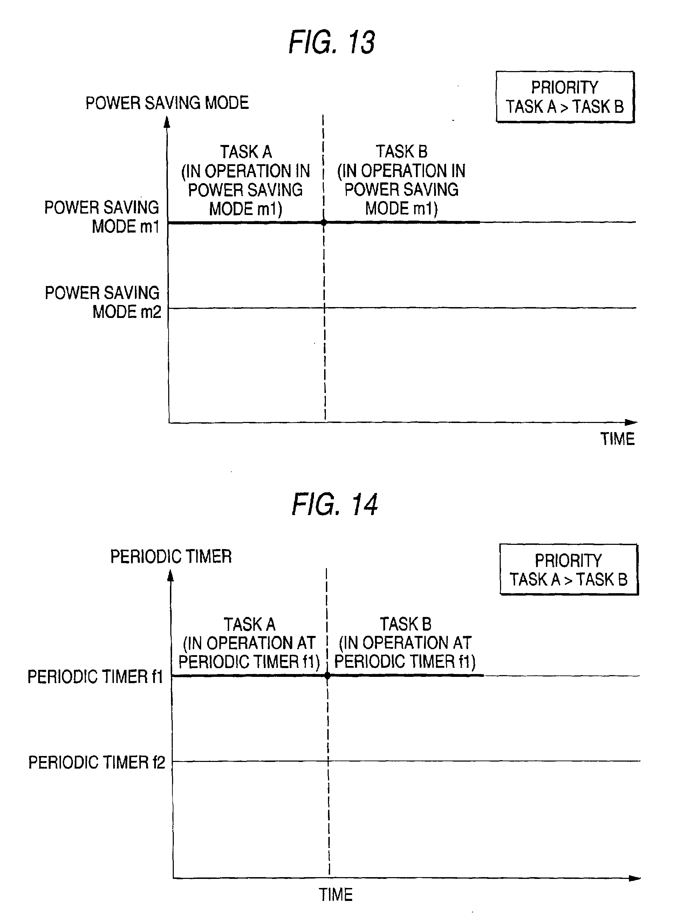

FIG.13 is a transition diagram of an operating system according to the sixth embodiment of the present invention. In this case, the functional configuration of the virtual computer system employed in the sixth embodiment is shown in FIG.12.

The operating system in the sixth embodiment has the priority comparing portion for comparing the priorities between the task that is in operation and the task that issues the power-saving mode switching request, and reduces the power consumption by managing/controlling the power-saving mode switching request of the CPU to.the hardware devices every task.

Then, a power-saving mode switching operation of the CPU in the sixth embodiment will be explained with reference to FIG.12 and FIG.13 hereunder. In the operating system for managing/controlling a plurality of tasks, if the power-saving mode switching request is issued from the task B other than the task A when the task A is in operation, the execution states of respective tasks and the execution states of respective hardware devices are managed and the storing portion 11 stores/manages which tasks are being executed in which power-saving modes. The receiving portion 12 receives/stores the power-saving mode switching request from the task B. Then, the controlling portion 13 compares the content stored in the receiving portion 12 with the content stored in the storing portion 11 to examine them, As a result, if the request content of this time is the request issued from the task B, such power-saving mode switching request is not executed. Then, when the process of the task A is finished and the switching to the task B is carried out, the priorities of the task A and the task B (i.e., task priorities of tasks that can be executed by the operating system) are compared with each other to decide, and the power-saving mode to be changed at the time of switching to the task B can be decided based on the compared result of the task priorities.

As shown in FIG.13, when the task A is in operation in the power-saving mode m1, the change request to the power-saving mode m2 of the task B is not executed for the hardware device. Then, when the process of the task A is ended and than the task is switched to the task B, the task priorities of the task A and the task B are compared with each other to decide. If the task A has the higher task priority, the mode can be switched into the power-saving mode m1 of the task A.

Also, if the task B has the higher task priority, the mode can be switched into the power-saving mode m2 of the task B (not shown).

In addition, in the operating system in the sixth embodiment, after the process of the task A is ended and the switching to the task B and the setting to the power-saving mode of the task B are carriedout, the task B can also set/change the power-saving mode when the task B is being executed. Otherwise, after the process of the task A is ended and the switching to the task B and the setting to the power-saving mode of the task B are carried out, the task priorities of the task A and the task B are compared with each other to decide and then the power-saving mode can be decided based on the priority comparison during when the task B is being executed. In this case, not only the execution priority of the task but also the priority of the power-saving mode may be set and then the power-saving mode may be decided based on the compared result of the priority.

In this manner, in the operating system for managing/ controlling a plurality of tasks, if the power-saving mode switching request is issued from the task other than the task that is in operation, the priorities of a plurality of tasks are compared mutually by the priority comparing portion and then the power-saving mode to be changed can be decided based on the compared result of the priority after the task that is in operation is completed.

As described above, in the present embodiment, if the power-saving mode switching request is issued from other task during when one task is in operation, the event that the access to the hardware device is caused every time when the power-saving mode switching request is issued from other task can be prevented by processing the task that is in operation without the execution of such request, and also the consumption of the useless power can be prevented.

### [Seventh embodiment]

FIG.14 is a transition diagram of an operating system according to a seventh embodiment of the present invention. The functional configuration of the virtual computer system employed in the seventh embodiment is shown in FIG.1.

The operating system in the seventh embodiment has the priority comparing portion for comparing the priorities between the task that is in operation and the task that issues the periodic-timer switching request, and reduces the power consumption by managing/controlling the periodic-timer switching request to respective hardware devices in respective tasks.

This operating system in the seventh embodiment receives the periodic-timer switching request for changing the periodic-timer, in place of the power-saving mode switching request of the CPU in the configuration of the sixth embodiment. Since other elements are similar to the constituent elements of the sixth embodiment, their explanation will be omitted.

Then, a periodic-timer switching operation in the seventh embodiment will be explained with reference to FIG.12 and FIG.14. In the operating system for managing/controlling a plurality of tasks, if the periodic-timer switching request is issued from the task other than the task A during when the task A is in operation, the execution states of respective tasks and the execution states of respective hardware devices are managed, and also the storing portion 11 stores/manages which tasks are being executed at which periodic-timers. The receiving portion 2 receives the periodic-timer switching request from the task B, and the controlling portion 23 compares the content stored in the receiving portion 12 with the content stored in the storing portion 11 to examine them. As the compared result, if the request content of this time is the request issued from the task B, such periodic-timer switching request is not executed. Then, when the process of the task A is ended and the task is switched to the task B, the priority comparing portion 15 compares the task priorities of the task A and the task B mutually to decide and then the periodic-timer to be changed at the switching to the task B can be decided.

As shown in FIG.14, when the task A is in operation at the periodic-timer f1, the change request to the periodic-timer f2 of the task B is not executed for the hardware device. Then, when the process of the task A is ended and then the task is switched to the task B, the priorities of the task A and the task B are compared mutually to decide. If the task A has the higher priority, the periodic-timer can be switched into the periodic-timer f1 of the task A.

Also, if the task B has the higher priority, the periodic-timer can be switched into the periodic-timer f2 of the task B (not shown).

Also, in the operating system in the seventh embodiment, after the process of the task A is ended and then the switching to the task B and the setting into the periodic-timer of the task B are carried out, the task B can change the periodic-timer when the task B is in operation. Otherwise, after the process of the task A is ended and the switching to the task B and the setting to the periodic-timer of the task B are carried out, the task priorities of the task A and the task B are compared mutually to decide and then the periodic-timer can be decided based on. the priority comparison during when the task B is being executed. In this case, not only the execution priority of the task but also the priority of the periodic-timer may be set, and then the periodic-timer may be decided based on the compared result of the priority.

In this manner, in the operating system for managing/ controlling a plurality of tasks, if the periodic-timer switching request is issued from the task other than the task that is in operation, the priorities of a plurality of tasks are compared mutually by the priority comparing portion to decide and then the periodic-timer to be changed at the task switching can be decided based on the compared result of the priority after the task that is in operation is ended.

As described above, in the present embodiment, if the periodic-timer switching request is issued from other task during when one task is in operation, the event that the access to the hardware device is caused every time when the periodic-timer switching request is issued from other task can be prevented by processing the task that is in operation before such request is executed, and also the consumption of the useless power can be prevented.

### (Virtual computer system for controlling a plurality of operating systems)

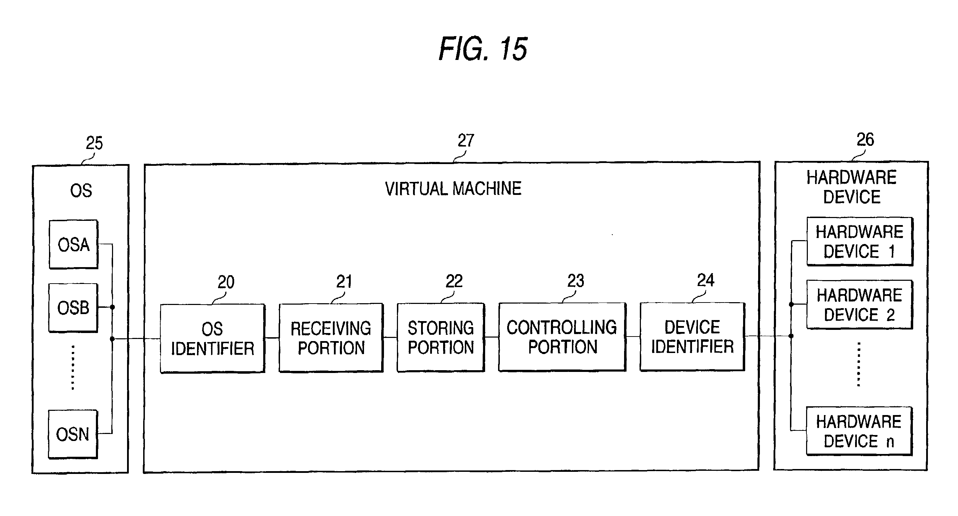

Next, an operation for managing/controlling the switching request in the virtual computer system that executes/controls a plurality of operating systems will be explained hereunder. FIG.15 is a block diagram showing a functional configuration of a virtual computer system according to present embodiments.

This virtual computer system includes a virtual machine 27 that comprises an operating system identifier (abbreviated as an OS identifier hereinafter) 20 for managing the execution situations of a plurality of operating systems 25, a receiving portion 21 for receiving/ storing any one of the power-supply ON request or the power-supply OFF request or both of these requests from the above operating systems, for example, a storing portion 22 for storing/managing power-supply ON/OFF information of respective hardware devices every operating system, a controlling portion 23 for comparing the content stored in the receiving portion 21 with the content stored in the storing portion 22 to control, and a device identifier 24 for managing the execution situations of a plurality of hardware devices 26. The OS identifier 20, the storing portion 22, the receiving portion 21, the controlling portion 23, and the device identifier 24 are constructed by software programs and data that can be executed by the CPU in semiconductor memories, etc. provided to the computer system, and more concrete configurations and operational principles of respective means can be implemented by using the well-known technology. Therefore, their explanation will be omitted herein and thus only characterizing portions of present. embodiments will be explained.

As the embodiment concerning to the operation of the operating system in the virtual computer system shown in FIG.15, an eighth embodiment (power-supply ON/OFF switching request), ninth and tenth embodiments (power-saving mode switching request of CPU), and eleventh and twelfth embodiments (periodic-timer switching request) will be explained hereinafter.

### [Eighth embodiment]

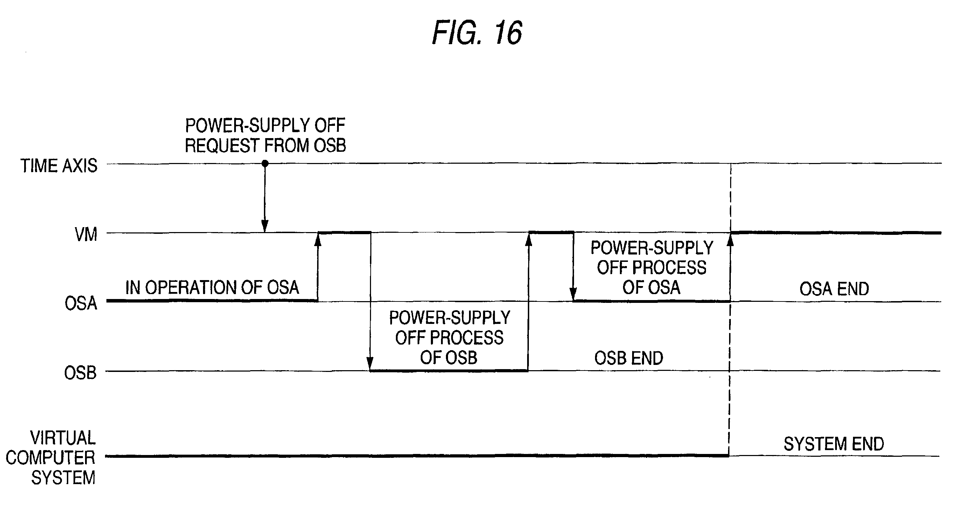

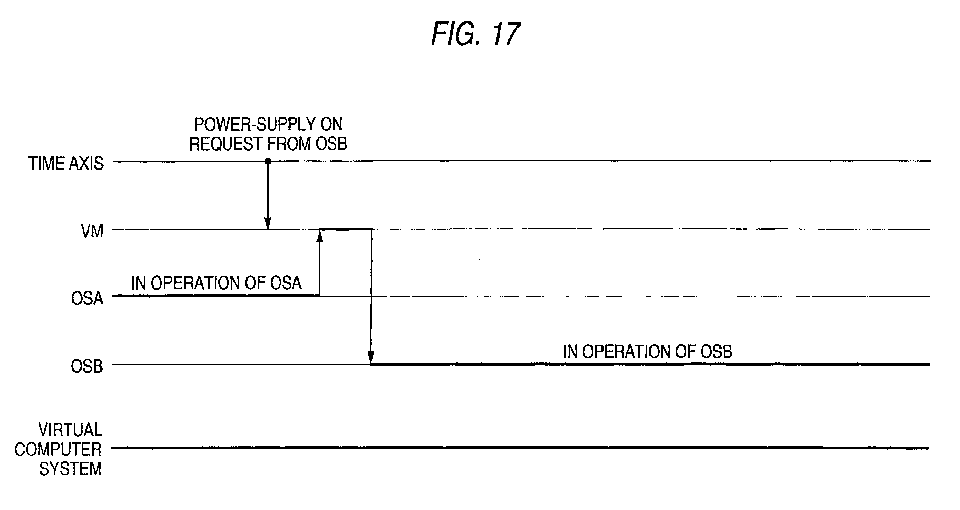

FIG.16 and FIG.17 are transition diagrams of a virtual computer system according to an eighth embodiment of the present invention. In this case, the functional configuration of the virtual computer system employed in the eighth embodiment is shown in FIG.15.

The operating system in the eighth embodiment reduces the power consumption by managing/controlling the power-supply ON/OFF switching request for respective hardware devices in respective operating systems.

The power-supply ON/OFF switching request in the eighth embodiment will be explained with reference to FIC.15. In the operating system for controlling a plurality of operating systems 25 and a plurality of hardware devices 26, if the power-supply ON/OFF switching request is issued from OSB (operating system B) as the operation other than OSA (operating systemA) when the OSA is in operation, which operating system is being executed is checked by the OS identifier 20 formanaging the execution situations of the respective operating systems, and the execution situations of respective hardware devices are checked by the device identifier 24, whereby the storing portion 22 stores/manages which operating system is executing the hardware device. The receiving portion 21 receives/stores the power-supply ON/OFF switching request from other operating system OSB other than the OSA. Then, the controlling portion 23 compares the content of the OSB that issues the power-supply ON/OFF switching request stored in the receiving portion 21 with the content of the present OSA stored in the storing portion 22 to examine them. As the compared result, if the content of the power-supply ON/OFF switching request of this time is the power-supply ON/OFF switching request issued from other operating system OSB except the OSA that is in operation, this power-supply ON/OFF switching request from the OSB is processed not to be received as far as the OSA that is in operation executes the hardware device. In this case, the switching timing of the operating system, the switching approach of the operating system, etc. are similar to the normal virtual computer system.

As shown in FIG.16, if the power-supply OFF request is issued from the task B during when the OSA is in process, the power-supply OFF request of the OSB is held once in the virtual machine. Then, the power-supply OFF request is received at the stage when the execution right is transferred to the virtual machine after the process of the OSA is ended, then the power-supply OFF process of the OSB is carried out, the power-supply OFF process of the OSA is carried out, and then the system is ended.

Also, as shown in FIG.17, if the power-supply OFF request is issued from the OSB, the power-supply ON request from the OSB is not executed for the hardware device when the OSA is being executed. Then, after the process of the task A is ended, the task is switched and then the process of the task B is executed as it is.

Also, if both of the power-supply ON request and the power-supply OFF request are received and any one of these requests is issued, the request issued from the operating system other than the operating system that is in operation currently may be processed/executed like the above after the process of the operating system that is in operation is ended.

As described above, in the present embodiment, if the power-supply ON/OFF switching request is issued from other operating system during when one operating system is in operation, the operating system that is in operation is ended before such request is executed. Therefore, the event that the access to the hardware device is caused every time when the power-supply ON/OFF switching request is issued from other operating system can be prevented, and also the consumption of the useless power can be prevented.

### [Ninth embodiment]

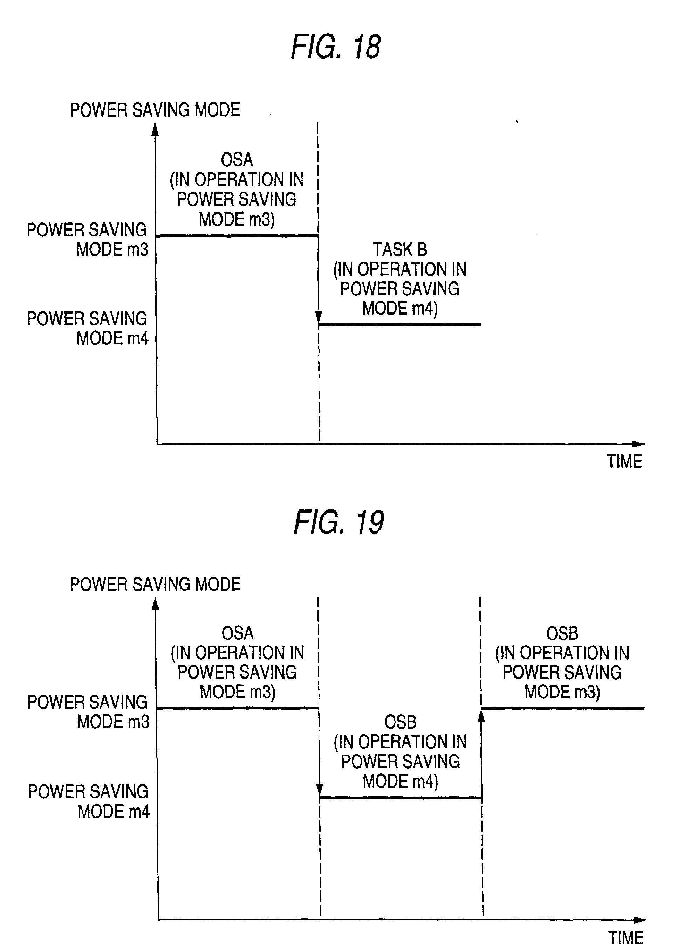

FIG.18 and FIG.19 are transition diagrams of a virtual computer system according to a ninth embodiment of the present invention. The mechanical configuration of the virtual computer system employed in the ninth embodiment is shown in FIG.15.

The virtual computer system in the ninth embodiment reduces the power consumption by managing/controlling the power-saving mode switching request of the CPU to respective hardware devices.

In this virtual computer system, each operating system has power-saving mode information and also the power-saving mode switching request for changing the power-saving mode of the CPU is received in place of the power-supply ON/OFF switching request in the configuration of the eighth embodiment. Since other elements are similar to the constituent elements of the eighth embodiment, their explanation will be omitted.

Then, a power-saving mode switching operation of the CPU in the ninth embodiment will be explained with reference to FIG.15 and FIG.18. In the operating system for controlling a plurality of operating systems 25 and a plurality of hardware devices 26, if the power-saving mode switching request is issued from the operating system OSB other than the task A during when the operating system OSA is in operation, the storing portion 22 stores/manages which operating systems are executed in which power-saving modes by using the OS identifier 20, that manages the execution states of a plurality of operating systems, and the device identifier 24, that manages the execution states of a plurality of devices. The receiving portion 21 receives the power-saving mode switching request from the OSB, and the content stored by the receiving portion 21 is compared with the content stored by the storing portion 22 to examine them. As the compared result, if the content of the power-saving mode switching request of this time is the request issued from the OSB, such power-saving mode switching request is processed not to be executed.

As shown in FIG.18, if the change into the power-saving made m4 of the OSB is requested when tho OSA is in operation in the power-saving mode m3, such power-saving mode switching request of the OSB is not executed for the hardware device, and then the switching to the OSB and the change into the power-saving mode m4 of the OSB are carried out at a point of time when the process of the OSA is ended.

Also, in the virtual computer system of the ninth embodiment, after the switching to the OSB and the setting to the power-saving mode of the CPU are carried out based on the power-saving mode information of the OSB, the power-saving mode can also be set/changed during the execution of the OSB.

As shown in FIG.19, if the request for changing into the power-saving mode m4 of the OSB is issued during when the OSA is in operation in the power-saving mode m3, the switching to the OSB and the change into the power-saving mode m4 of the task B are carried out at a point of time when the process of the OSA is ended. Then, the mode is changed into the power-saving mode m3 during when the OSB is in operation.

As described above, in the present embodiment, if the power-saving mode switching request is issued from other operating system during when one operating system is in operation, the event that the access to the hardware device is caused every time when the power-saving mode switching request is issued from other operating system can be prevented by processing the operating system that is in operation before such request is carried out, and also the consumption of the useless power can be prevented.

### [Tenth embodiment]

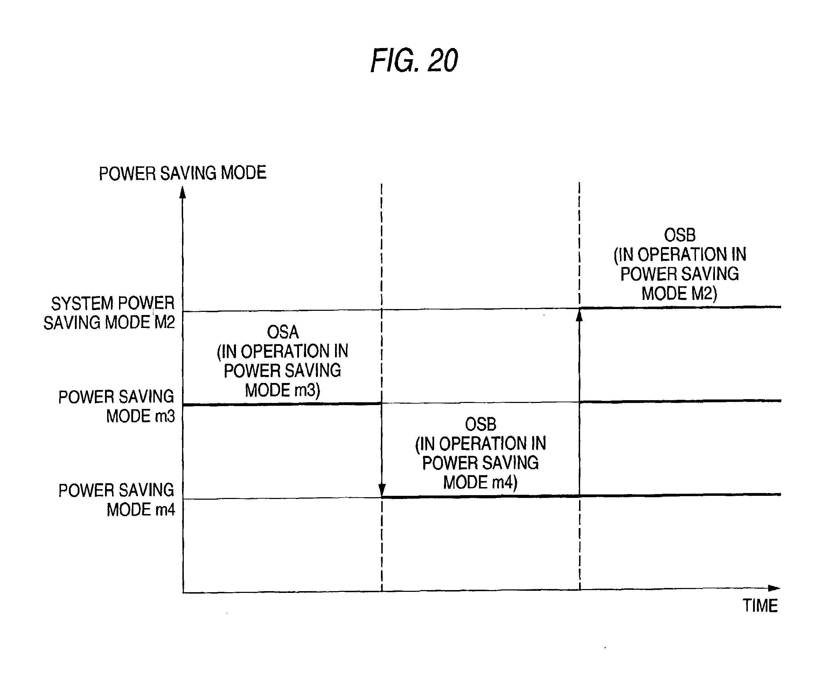

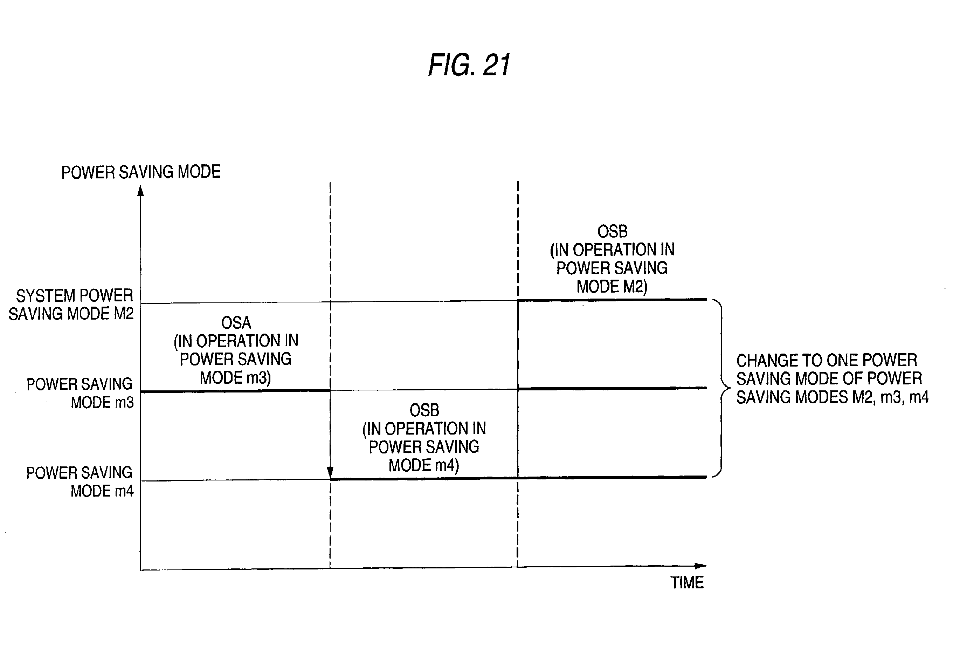

FIG.20 and FIG.21 are transition diagrams of a virtual computer system according to a tenth embodiment of the present invention. The functional configuration of the virtual computer system employed in the tenth embodiment is shown in FIG.15.

The virtual computer system according to the tenth embodiment has the power-saving mode of the virtual computer system itself. The storing portion 22 in the configuration of the ninth embodiment stores/manages execution states of respective hardware devices and respective operating systems and which operating systems are being executed in which power-saving modes, and in addition stores/manages the power-saving mode information of the virtual computer system itself. Since other elements are similar to the constituent elements of the ninth embodiment, their explanation will be omitted.

Then, a power-saving mode switching operation in the tenth embodiment will be explained with reference to FIG.15 and FIG.20. If the power-saving mode switching request is issued from the operating system OSB other than the task A during when the OSA is in operation, the storing portion 22 stores/manages the power-saving mode information of the virtual computer system itself and in addition which tasks are being executed in which power-saving modes, by using the OS identifier 20 for managing the execution states of a plurality of operating systems and the device identifier 24 for managing the execution states of a plurality of devices. The controlling portion 23 compares the content of the power-saving mode switching request from the OSB stored in the receiving portion 21 with the content stored in the storing portion 22 to examine them. As the compared result, if the power-saving mode switching request of this time is the request issued from the OSB, such power-saving mode switching request is processed not to be executed. Then, after the process of the OSA is ended and then the switching to the OSB and the setting of the power-saving mode of the OSB are carried out, the power-saving mode information of the operating system itself and the power-saving mode information of the OSB are compared with each other to decide when the OSB is in operation. Then, the mode can be set/changed to the power-saving mode of the CPU based on the result.

As shown in FIG.20, the change request to the power-saving mode m4 of the OSB is not executed for the hardware device during when the OSA is in operation in the power-saving mode m3, and the OSA is switched to the OSB at a point of time when the process of the OSA is ended and at the same time the mode is switched into the power-saving mode m4 of the OSB. Then, the power-saving mode may be freely switched during the execution of the OSB, based on the compared/decided result between the power-saving mode M2 of the virtual computer system and the power-saving mode m4 of'the OSB.

Also, in the virtual memory system of the tenth embodiment, the content of the power-saving mode information from the OSB stored in the receiving portion 21 and the power-saving mode information contained in the virtual computer system itself are compared with each other to examine them upon switching of the OSB after the execution of the above OSA, and the power-saving mode may be freely selected based on the result.

As shown in FIG.21, the change request to the power-saving mode m4 of the OSB is not executed for the hardware device during when the OSA is in operation in the power-saving mode m3. Then, when the process of the OSA is ended and the process for switching to the OSB is executed, the power-saving mode m4 of the OSB and the power-saving mode M2 of the virtual computer system itself are compared with each other. As the compared result, the power-saving mode to be executed later maybe freely selected. If the power-saving mode is switched, for example, the priority is assigned between the power-saving mode of the virtual computer system itself and the power-saving mode of the task, or the power-saving mode is preferentially switched into the power-saving mode in which the smaller power consumption is needed.

In this manner, in the virtual computer system for executing/controlling a plurality of operating systems, if the power-saving mode switching request is issued from the operating system other than the operating system that is in operation, the power-saving mode of the operating system and the power-saving mode of the virtual computer system are compared with each other after the process of the operating system that is in operation is ended, and the power-saving mode can be switched based on the result.

As described above, in the present embodiment, if the power-saving mode switching request is issued from other operating system during when one operating system is in operation, the event that the access to the hardware device is caused every time when the power-saving mode switching request is issued from other operating system can be prevented by processing the operating system that is in operation before such request is carried out, and also the consumption of the useless power can be prevented.

### [Eleventh embodiment]

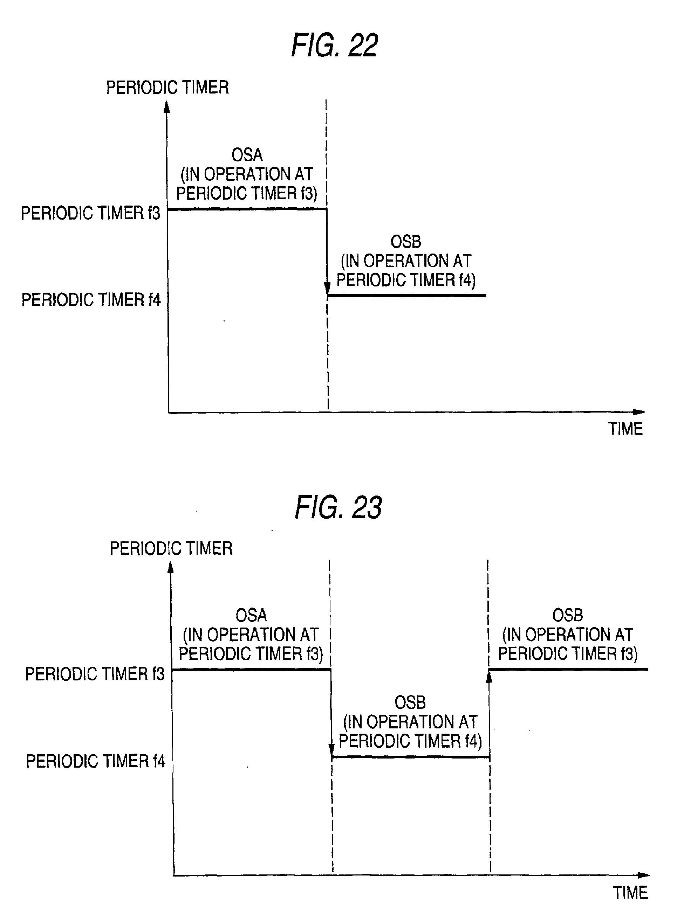

FIG.22 and FIG.23 are transition diagrams of a virtual computer system according to an eleventh embodiment of the present invention. The functional configuration of the virtual computer system employed in the eleventh embodiment is shown in FIG.15.

The virtual computer system in the eleventh embodiment reduces the power consumption by managing/controlling the periodic-timer switching request to respective hardware devices in respective operating systems.

This virtual computer system receives the periodic-timer switching request for changing the periodic-timer, in place of the power-supply ON/OFF switching request in the configuration of the eighth embodiment. Since other elements are similar to the constituent elements of the eighth embodiment, their explanation will be omitted.

Then, a periodic-timer switching operation in the eleventh embodiment will be explained with reference to FIG. 15 and FIG.22. In the virtual computer system for managing a plurality of operating systems 25 and a plurality of hardware devices 26, if the periodic-timer switching request is issued from the operating system other than the task A during when the OSA is in operation, the storing portion 22 manages which operating systems are being executed at which periodic-timers, byusing the OS identifier 20 for managing the execution states of a plurality of operating systems and the device identifier 24 for managing the execution states of a plurality of hardware devices, and then the receiving portion 21 receives/stores the periodic-timer switching request from the OSB. Then, the controlling portion 23 compares the content stored in the receiving portion 21 with the content stored in the storing portion 22 to examine them. As the compared result, if the request content of this time is the request issued from the OSB, such periodic-timer switching request is processed not to be executed. Then, when the process of the OSA is ended and the operating system is switched, the periodic-timer of the CPU is set based on the periodic-timer information of the switched OSB.

As shown in FIG.22, when the OSA is executed at the periodic-timer f3, the change request for the periodic-timer f4 of the OSB is not executed for the hardware device, and the switching to the OSB and the change to the periodic-timer f4 of the OSB are carried out at a point of time when the process of the OSA is ended.

Also, in the virtual computer system in the eleventh embodiment, after the process of the OSA is ended and then the switching to the OSB and the setting to the periodic-timer of the OSB are carried out, the periodic-timer can be set/ changed when the OSB is in operation.

As shown in FIG.23, if the OSA is in operation at the periodic-timer f3, the switching request to the periodic-timer f4 of the OSB is not executed for the hardware device. Then, the period is switched into the periodic-timer f3 during when the OSB is in operation at a point of time when the process of the task A is ended after the switching to the OSB and the change to the periodic-timer f4 of the OSB are carried out.

As described above, in the present embodiment, upon managing/controlling a plurality of operating systems, if the periodic-timer switching request is issued from other operating system during when one operating system is in operation, the event that the access to the hardware device is caused every time when the periodic-timer switching request is issued from other operating system can be prevented by processing the operating system that is in operation before such request is carried out, and also the consumption of the useless power can be prevented.

### [Twelfth embodiment]

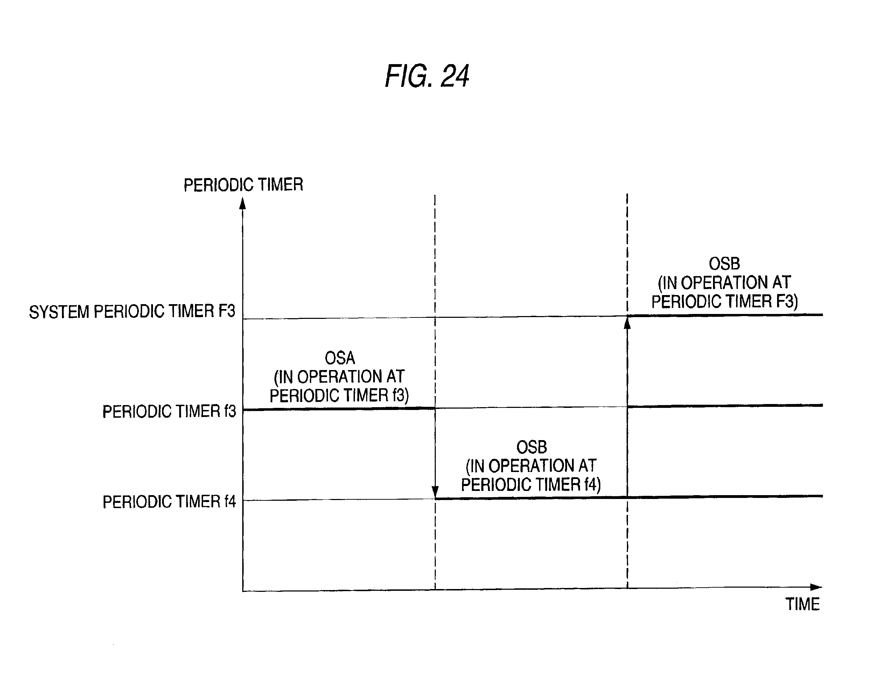

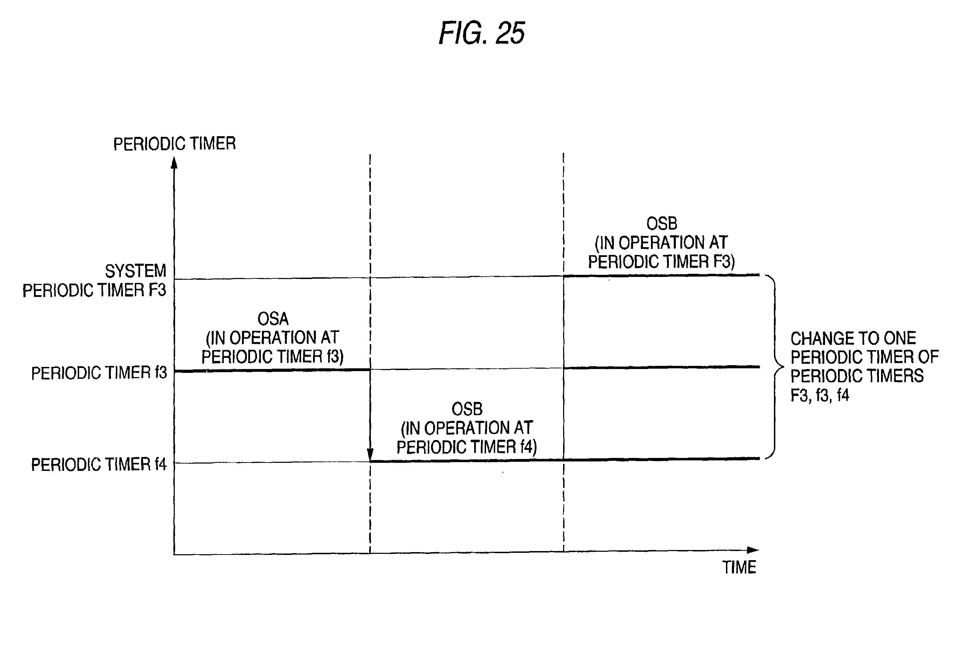

FIG.24 and FIG.25 are transition diagrams of a virtual computer system according to a twelfth embodiment of the present invention. The functional configuration of the virtual computer system employed in the twelfth embodiment is shown in FIG.15.

In addition to the storing portion 22 in the configuration of the eleventh embodiment stores/manages execution states of respective operating systems and respective hardware devices and which operating systems are being executed at which periodic-timers, the virtual computer system of the twelfth embodiment stores/manages the periodic-timer information of the virtual computer system itself. Since other elements are similar to the constituent elements of the eleventh embodiment, their explanation will be omitted.

Then, a periodic-timer switching operation in the twelfth embodiment will be explained with reference to FIG.15 and FIG.24. In the virtual computer system for managing a plurality of operating systems 25 and a plurality of hardware devices 26, if the periodic-timer switching request is issued from the operating system OSB other than the OSA during when the OSA is in operation, the storing portion 22 manages the periodic-timer information of the virtual computer system itself and in addition which operating systems are being executed at which periodic-timers, by using the OS identifier 20 for managing the execution states of a plurality of operating systems and the device identifier 24 form anaging the execution states of a plurality of devices. , and then the receiving portion 21 receives/stores the periodic-timer switching request from the OSB. The controlling portion 23 compares the content of the periodic-timer switching request from the OSB stored in the receiving portion 21 with the content stored in the storing portion 22 to examine them. As the compared result, if the request content of this time is the request issued from the operating system B, such periodic-timer switching request is processed not to be executed. Then, after the process of the OSA is ended and then the switching to the OSB and the setting to the periodic-timer of the OSB are carried out, the periodic-timer information of the virtual computer system itself and the periodic-timer of the OSB are compared with each other and decided, and then the periodic-timer can be switched according to the result during when the OSB is in operation.

As shown in FIG.24, when the OSA is in operation at the periodic-timer f3, the change request to the periodic-timer f4 of the OSB is not executed for the hardware device. Then, the operating system is switched to the OSB and at the same time the period is switched into the periodic-timer f4 of the OSB at a point of time when the process of the OSA is ended. Then, the periodic-timer may be freely switched during the execution of the OSB, based on the compared/decided result between the periodic-timer F3 of the virtual computer system itself and the periodic-timer f4 of the task B.

Also, in the virtual storing system of the twelfth embodiment, when the above process of the OSA is ended and the operating system is switched into the OSB, the periodic-timer to be executed later may be freely selected based on the compared result between the periodic-timer f4 of the OSB and the periodic-timer F3 of the virtual computer system itself.

As shown in FIG.25, when the OSA is in operation at the periodic-timer f3, the change request to the periodic-timer f4 of the OSB is not executed for the hardware device. Then, when the process of the OSA is ended and the switching to the OSB is executed, the periodic-timer to be executed later may be freely selected, based on the compared result between the periodic-timer f4 of the OSB and the periodic-timer F3 of the virtual computer system itself. If the periodic-timer is switched, for example, the priority is assigned between the periodic-timer of the virtual computer system itself and the periodic-timer of the operating system, or the periodic-timer is preferentially switched into the periodic-timer which is longer and has the smaller power consumption.

In this manner, in the virtual computer system for executing/controlling a plurality of operating systems, when the periodic-timer switching request is issued from the operating system other than the operating system that is being executed, the periodic-timer of the operating system and the periodic-timer of the virtual computer system are compared with each other after the operating system that is in operation is processed, and then the periodic-timer can be switched based on the result.

As described above, in the present embodiment, if the periodic-timer switching request is issued from other operating system during when one operating system is in operation, the event that the access to the hardware device is caused every time when the periodic-timer switching request is issued from other operating system can be prevented by processing the operating system that is in operation before such request is carried out, and also the consumption of the useless power can be prevented.

### [Thirteenth embodiment]

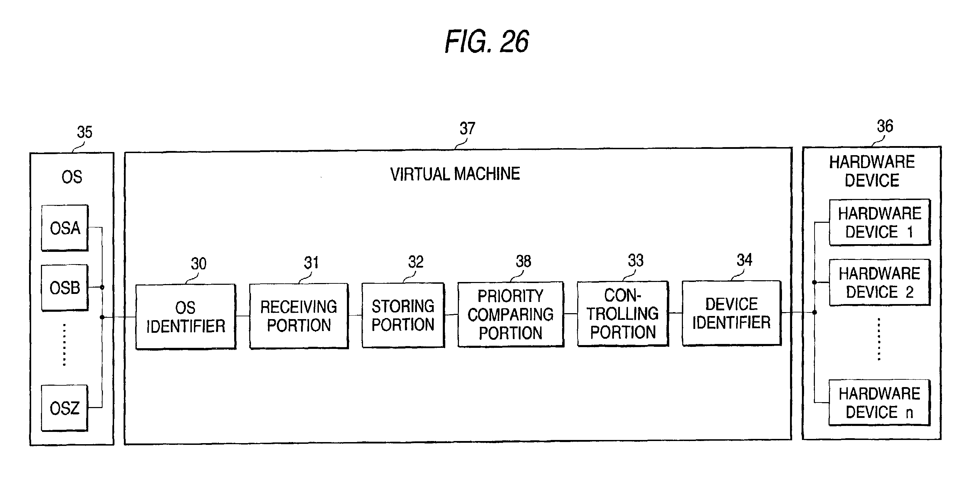

FIG.26 is a block diagram showing a functional configuration of a virtual computer system having a priority comparing portion according to present embodiments.

In the virtual computer system for managing a plurality of operating systems 35 and a plurality of hardware devices 36, this virtual computer system includes a virtual machine 37 that comprises an OS identifier 30 for managing the execution states of respective operating systems, a receiving portion 31 for receiving/storing the power-saving mode switching requests issued from the operating systems, a storing portion 32 for storing/ managing the power-saving mode switching requests to respective hardware devices every operating system, a priority comparing portion 38 for comparing the priorities between the power-saving mode that is in operation and the power-saving mode information stored in the storing portion 32, a controlling portion 33 for comparing the content of the power-saving mode switching request stored in the receiving portion 31 and the contents stored in the storing portion 32 to control, and a device identifier 34 for managing the execution states of respective hardware devices. This virtual computer system is similar to the virtual computer system shown in FIG.15 except that the priority comparing portion is provided thereto.

As the embodiment concerning to the operation of the operating system in the virtual computer system shown in FIG.26, a thirteenth embodiment (power-saving mode switching request of CPU), and a fourteenth embodiment (periodic-timer switching request) will be explained hereinafter.

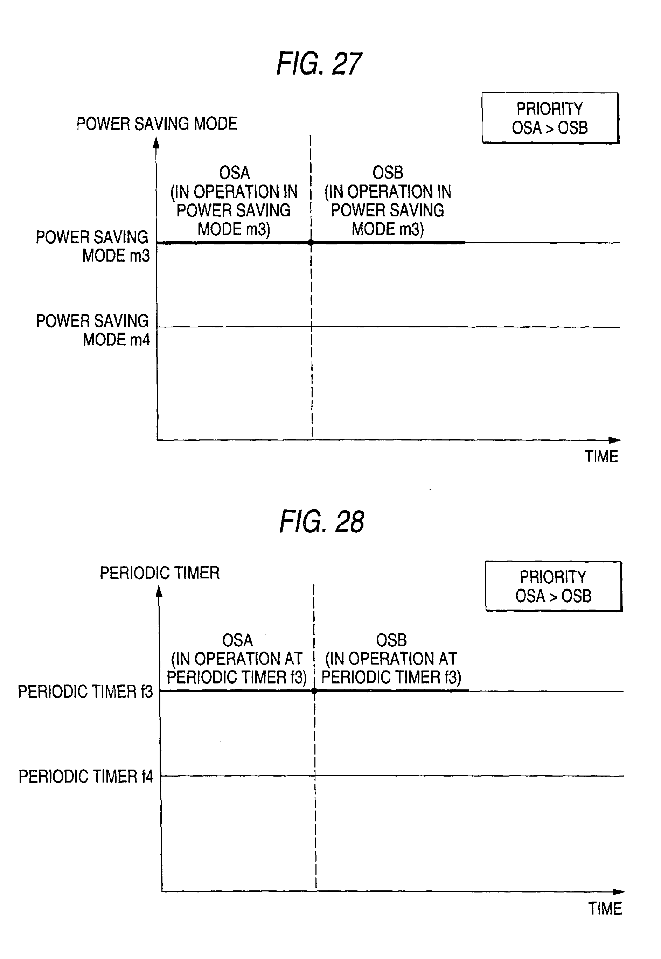

FIG.27 is a transition diagram of a virtual computer system according to a thirteenth embodiment of the present invention. In this case, the functional configuration of the virtual computer system employed in the thirteenth embodiment is shown in FIG.26.

The virtual computer system in the thirteenth embodiment has the priority comparing portion for comparing the priorities between the operating system that is in operation and the operating system that issues the power-saving mode switching request, and reduces the power consumption by managing/controlling the power-saving mode switching request of the CPU to the hardware devices every operating system.

Then, a power-saving mode switching operation in the thirteenth embodiment will be explained hereunder. In the virtual computer system for managing a plurality of operating systems 35 and a plurality of hardware devices 36, the storing portion 32 manages which operating systems are being executed in which power-saving modes, by using the OS identifier 30 for managing the execution states of a plurality of operating systems and the device identifier 34 formanaging the execution states of a plurality of devices. The receiving portion receives the power-saving mode switching request from the OSB. Then, the content stored in the receiving portion 31 is compared with the contents stored in the storing portion 32. As the compared result, if the request content of this time is the request issued from the OSB, such power-saving mode switching request is not executed. Then, when the process of the OSA is ended and the switching process to the OSB is carried out, the priorities of the OSA and the OSB are compared with each other to decide, and the power-saving mode to be changed at the time of switching to the OSB can be decided based on the compared result of the priorities.

As shown in FIG.27, when the OSA is in operation in the power-saving mode m3, the change request to the power-saving mode m4 of the OSB is not executed for the hardware device. Then, when the operating system is switched to the OSB at a point of time when the process of the OSA is ended, the priorities of the OSA and the OSB (i.e., execution priorities of the operating systems) are compared with each other to decide. If the OSA has the higher priority, the mode can be switched into the power-saving mode m3 of the OSA.

Also, if the OSB has the higher priority, the mode can be switched into the power-saving mode m4 of the OSB (not shown).

In addition, in the virtual computer system in the thirteenth embodiment, after the process of the OSA is ended and the switching to the OSB and the setting to the power-saving mode of the OSB are carried out, the OSB can also set/change the power-saving mode when the OSB is being executed. Otherwise, after the process of the OSA is ended and the switching to the OSB and the setting to the power-saving mode of the OSB are carried out, the operating system priorities of the OSA and the OSB are compared mutually to decide and then the power-saving mode can be decided based on the priority comparison during when the OSB is being executed. In this case, not only the execution priority of the operating system but also the priority of the power-saving mode may be set and then the power-saving mode may be decided based on the compared result of the priority.

In this manner, in the virtual computer system, if the power-saving mode switching request is issued from the operating system other than the operating system that is in operation, the priorities of a plurality of tasks are compared mutually by the priority comparing portion to decide, and then the power-saving mode to be changed can be decided based on the compared result of the priority after the operating system that is in operation is completed.

As described above, in the present embodiment, if the power-saving mode switching request is issued from other operating system during when one operating system is in operation, the event that the access to the hardware device is caused every time when the power-saving mode switching request is issued from other operating system can be prevented by processing the operating system that is in operation before such request is executed, and also the consumption of the useless power can be prevented.

### [Fourteenth embodiment]

FIG.28 is a transition diagram of a virtual computer system according to a fourteenth embodiment of the present invention. The functional configuration of the virtual computer system employed in the fourteenth embodiment is shown in FIG.26.

The virtual computer system in the fourteenth embodiment reduces the power consumption by managing/ controlling the periodic-timer switching request to respective hardware devices in respective operating systems.

This operating system receives the periodic-timer switching request for changing the periodic-timer, in place of the power-saving mode switching request of the CPU in the configuration of the thirteenth embodiment. Since other elements are similar to the constituent elements of the thirteenth embodiment, their explanation will be omitted.

Then, a periodic-timer switching operation in the fourteenth embodiment will be explained. In the virtual computer system for managing a plurality of operating systems 35 and a plurality of hardware devices 36, the storing portion 32 manages which tasks are being executed at which periodic-timers, by using the OS identifier 30 for managing the execution states of a plurality of operating systems 35 and the device identifier 34 for managing the execution states of a plurality of hardware devices 36. The receiving portion 31 receives the periodic-timer switching request from the OSB. The content stored in the receiving portion 31 is compared with the contents stored in the storing portion 32 to examine them. As the compared result, if the request content of this time is the request issued from the OSB, such periodic-timer switching request is not executed. Then, when the switching process to the OSB is carried out after the process of the OSA is ended, the priorities of the OSA and the OSB are compared mutually to decide and then the periodic-timer to be changed at the switching to the OSB can be decided based on the compared result of the priority.

As shown in FIG.28, when the OSA is in operation at the periodic-timer f3, the change request to the periodic-timer f4 of the OSB is not issued to the hardware device. Then, when the operating system is switched to the OSB at a point of time when the process of the OSA is ended, the priorities of the OSA and the OSB are compared mutually to decide. If the OSA has the higher priority, the periodic-timer can be switched into the periodic-timer f3 of the OSA. Also, if the OSB has the higher priority, the periodic-timer can be switched into the periodic-timer f4 of the OSB.

Also, in the virtual computer system in the fourteenth embodiment, after the process of the OSA is ended and then the switching to the OSB and the setting into theperiodic-timer of the OSB are carried out, the periodic-timer can be changed during when the operating system is in operation. Otherwise, after the process of the operating system A is ended and the switching to the operating system B and the setting to the periodic-timer of the OSB are carried out, the priorities of the OSA and the OSB are compared mutually to decide during when the OSB is being executed, and then the periodic-timer can be set/changed based on the comparison result of the priority. In this case, not only the execution priority of the operating system but also the priority of the periodic-timer may be set, and then the periodic-timer may be decided based on the compared result of the priority.

In this manner, in the virtual computer system, if the periodic-timer switching request is issued from the operating system other than the operating system that is in operation, the priorities of a plurality of tasks are compared mutually by the priority comparing portion to decide and then the periodic-timer to be changed can be decided based on the compared result of the priority after the operating system that is in operation is ended.

As described above, in the present embodiment, if the periodic-timer switching request is issued from other operating system during when one operating system is in operation, the event that the access to the hardware device is caused every time when the periodic-timer switching request is issued from other operating system can be prevented by processing the operating system that is in operation before such request is executed, and also the consumption of the useless power can be prevented.

As shown in the above embodiments, in the operating system, execution information of respective hardware devices can be managed/controlled every task, and the direct controlling of the hardware devices by immediately executing the requests such as the power-supply ON/OFF switching request, etc. in connection with the power consumption can be prevented by executing the power-supply ON/OFF control, the power-saving mode control of the CPU, the clock switching control, etc., and also the process execution of various requests can be appropriately managed. Accordingly, the current consumption can be suppressed.

Also, in the virtual computer system, execution information of respective hardware devices can be managed/ controlled every operating system and also the current consumption can be suppressed by executing the power-supply ON/OFF control, the power-saving mode control of the CPU, the clock switching control, etc.

### <Industrial Application>

As described above, according to the operating system and the virtual computer system of the present invention, the request such as the power-supply ON/OFF, etc. to the hardware device can be managed upon controlling a plurality of tasks and a plurality of operating systems, and thus the power consumption can be reduced.

## Claims

1. An operating system for managing a plurality of tasks, comprising:
a storing means for storing execution information containing execution states of hardware devices in respective tasks;
a request receiving means for receiving at least one request of a power-supply ON request and a power-supply OFF request to the hardware devices; and
a power-supply switching/controlling means for controlling process execution of the request based on the execution information, and not-performing the process execution of the power-supply ON request or the power-supply OFF request when other task is using the hardware devices if at least one task issues at least one of the power-supply ON request and the power-supply OFF request to at least one hardware device.

2. An operating system for managing a plurality of tasks, comprising:
a storing means for storing power-saving mode information of hardware devices in respective tasks;
a request receiving means for receiving a power-saving mode switching request; and
a power-saving mode switching/controlling means for controlling process execution of the request based on the power-saving mode information, and setting a power-saving mode based on the power-saving mode information of a switched task when the task is switched.

3. An operating system according to claim 2, wherein the power-saving mode switching/controlling means can set/change the power-saving mode based on the power-saving mode information during the execution of the task.

4. An operating system according to claim 2 or 3, further comprising a priority comparing means for comparing execution priorities of the tasks or priorities of the power-saving mode information, and
wherein the power-saving mode switching/ controlling means sets/changes the power-saving mode based on a compared result of the priorities during the execution of the task.

5. An operating system for managing a plurality of tasks, comprising:
a storing means for storing power-saving mode information of hardware devices in respective tasks and power-saving mode information of a concerned operating system itself;
a request receiving means for receiving a power-saving mode switching request; and
a power-saving mode switching/controlling means for controlling process execution of the request based on the power-saving mode information, and setting/ changing a power-saving mode by comparing the power-saving mode information of the task with the power-saving mode information of the operating system itself.

6. An operating system for managing a plurality of tasks, comprising:
a storing means for storing power-saving mode information of hardware devices in respective tasks and power-saving mode information of a concerned operating system itself;
a request receiving means for receiving a power-saving mode switching request; and
a power-saving mode switching/controlling means for controlling process execution of the request based on the power-saving mode information, and setting/ changing a power-saving mode by comparing the power-saving mode information of a switched task with the power-saving mode information of the operating system itself when the task is switched.

7. An operating system for managing a plurality of tasks, comprising:
a storing means for storing periodic-timer information of hardware devices in respective tasks;
a request receiving means for receiving a periodic-timer switching request; and
a periodic-timer switching/controlling means for controlling process execution of the request based on the periodic-timer information, and setting a periodic-timer based on the periodic-timer information of a switched when the task is switched.

8. An operating system according to claim 7, wherein the periodic-timer switching/controlling means can set/change the periodic-timer based on the periodic-timer information during the execution of the task.

9. An operating system according to claim 7 or 8, further comprising a priority comparing means for comparing execution priorities of the tasks or priorities of the periodic-timer information, and
wherein the periodic-timer switching/controlling means sets/changes the periodic-timer based on a compared result of the priorities during the execution of the task.

10. An operating system for managing a plurality of tasks, comprising:
a storing means for storing periodic-timer information of hardware devices in respective tasks and periodic-timer information of a concerned operating system itself;
a request receivingmeans for receiving a periodic-timer switching request; and
a power-saving mode switching/controlling means for controlling process execution of the request based on the periodic-timer information, and setting/changing a periodic-timer by comparing the periodic-timer information of the task with the periodic-timer information of the operating system itself.

11. An operating system for managing a plurality of tasks, comprising:
a storing means for storing periodic-timer information of hardware devices in respective tasks and periodic-timer information of a concerned operating system itself;
a request receiving means for receiving aperiodic-timer switching request; and
a periodic-timer switching/controlling means for controlling process execution of the request based on the periodic-timer information, and setting/changing a periodic-timer by comparing the periodic-timer information of a switched task with the periodic-timer information of the operating system itself when the task is switched.

12. A virtual computer system comprising:
an executing/controlling means for executing/ controlling at least one of operating systems set forth in claims 1 to 11.

13. A virtual computer system for executing/controlling a plurality of operating systems, comprising:
a storing means for storing execution information containing execution states of hardware devices in respective operating systems;
a request receiving means for receiving at least one request of a power-supply ON request and a power-supply OFF request to the hardware devices; and
a power-supply switching/controlling means for controlling process execution of the request based on the execution information, and not-performing the process execution of the power-supply ON request or the power-supply OFF request when other operating system is using the hardware devices if at least one operating system issues at least one of the power-supply ON request and the power-supply OFF request to at least one hardware device.

14. A virtual computer system for executing/ controlling a plurality of operating systems, comprising:
a storing means for storing power-saving mode information of hardware devices in respective operating systems;
a request receiving means for receiving a power-saving mode switching request; and
a power-saving mode switching/controlling means for controlling process execution of the request based on the power-saving mode information, and setting a power-saving mode based on the power-saving mode information of a switched operating system when the operating system is switched.

15. A virtual computer system according to claim 14, wherein the power-saving mode switching/controlling means can set/change the power-saving mode based on the power-saving mode information during the execution of the operating system.

16. A virtual computer system according to claim 14 or 15, further comprising a priority comparing means for comparing execution priorities of the operating systems or priorities of the power-saving mode information, and
wherein the power-saving mode switching/ controlling means sets/changes the power-saving mode based on a compared result of the priorities during the execution of the operating system,

17. A virtual computer system for executing/ controlling a plurality of operating systems, comprising:
a storing means for storing power-saving mode information of hardware devices in respective operating systems and power-saving mode information of a concerned virtual computer itself;
a request receiving means for receiving a power-saving mode switching request; and
a power-saving mode switching/controlling means for controlling process execution of the request based on the power-saving mode information, and setting/ changing a power-saving mode by comparing the power-saving mode information of the operating system with the power-saving mode information of the virtual computer system itself.

18. A virtual computer system for executing/ controlling a plurality of operating systems, comprising:
a storing means for storing power-saving mode information of hardware devices in respective operating systems and power-saving mode information of a concerned virtual computer system itself;
a request receiving means for receiving a power-saving mode switching request; and
a power-saving mode switching/controlling means for controlling process execution of the request based on the power-saving mode information, and setting/ changing a power-saving mode by comparing the power-saving mode information of a switched operating system with the power-saving mode information of the virtual computer system itself when the operating system is switched.

19. A virtual computer system for executing/ controlling a plurality of operating systems, comprising:
a storing means for storing periodic-timer information of hardware devices in respective operating systems;
a request receiving means for receiving aperiodic-timer switching request; and
a periodic-timer switching/controlling means for controlling process execution of the request based on the periodic-timer information, and setting a periodic-timer based on the periodic-timer information of a switched when the operating system is switched.

20. A virtual computer system according to claim 19, wherein the periodic-timer switching/controlling means can set/change the periodic-timer based on the periodic-timer information during the execution of the operating system.

21. A virtual computer system according to claim 19 or 20, further comprising a priority comparing means for comparing execution priorities of the operating systems or priorities of the periodic-timer information, and
wherein the periodic-timer switching/controllingmeans sets/changes the periodic-timer based on a compared result of the priorities during the execution of the operating system.

22. A virtual computer system for executing/ controlling a plurality of operating systems, comprising:
a storing means for storing periodic-timer information of hardware devices in respective operating systems and periodic-timer information of a concerned virtual computer system itself;
a request receiving means for receiving a periodic-timer switching request; and
a power-saving mode switching/controlling means for controlling process execution of the request based on the periodic-timer information, and setting/changing a periodic-timer by comparing the periodic-timer information of the operating system with the periodic-timer information of the virtual computer system itself.

23. A virtual computer system for executing/ controlling a plurality of operating systems, comprising:
a storing means for storing periodic-timer information of hardware devices in respective operating systems and periodic-timer information of a concerned virtual computer system itself;
a request receiving means for receiving a periodic-timer switching request; and
a periodic-timer switching/controlling means for controlling process execution of the request based on the periodic-timer information, and setting/changing a periodic-timer by comparing the periodic-timer information of a switched operating system with the periodic-timer information of the virtual computer system itself when the operating system is switched.
